# EUROPEAN PATENT APPLICATION

(11) **EP 4 380 285 A1**
(43) Date of publication of application: **05.06.2024**
(21) Application number: 23155808.1
(22) Date of filing: 09.02.2023
(51) Int. Cl.: H04W 74/00, H04L 1/08, H04W 56/00, H04W 74/08

(54) **USER EQUIPMENT, BASE STATION, AND METHOD**

(30) Priority: 30.11.2022 JP 2022191854
(71) Applicant: SHARP Kabushiki Kaisha, Sakai-City, Osaka 590-8522 (JP)
(72) Inventor: TAKAHASHI, Hiroki, Sakai City, Osaka, 590-8522 (JP); NOGAMI, Toshizo, Sakai City, Osaka, 590-8522 (JP); YOKOMAKURA, Kozue, Sakai City, Osaka, 590-8522 (JP); KITAHARA, Makoto, Sakai City, Osaka, 590-8522 (JP)
(74) Representative: Müller Hoffmann & Partner

(57) **Abstract**

A user equipment, UE, is described. The UE comprises reception circuitry to receive a DCI with a DCI format for RA procedure initiated by PDCCH order, transmission circuitry to transmit N repetitions of PRACH transmission using N RACH occasions, based on the DCI, wherein the DCI format includes a first field indicating a preamble index used for the PRACH transmission, a second field indicating a SS/PBCH index, and a third field indicating the N RACH occasions associated with a SS/PBCH indicated by the SS/PBCH index for the PRACH transmission.

## Description

### [Technical Field]

The present invention relates to a user equipment, a base station and a method.

### [Background]

In the 3rd Generation Partnership Project (3GPP), a radio access method and a radio network for cellular mobile communications (hereinafter, referred to as Long Term Evolution, or Evolved Universal Terrestrial Radio Access) have been studied. In LTE (Long Term Evolution), a base station device is also referred to as an evolved NodeB (eNodeB), and a terminal device is also referred to as a User Equipment (UE). LTE is a cellular communication system in which multiple areas are deployed in a cellular structure, with each of the multiple areas being covered by a base station device. A single base station device may manage multiple cells. Evolved Universal Terrestrial Radio Access is also referred as E-UTRA.

In the 3GPP, the next generation standard (New Radio: NR) has been studied in order to make a proposal to the International-Mobile-Telecommunication-2020 (IMT-2020) which is a standard for the next generation mobile communication system defined by the International Telecommunications Union (ITU). NR has been expected to satisfy a requirement considering three scenarios of enhanced Mobile BroadBand (eMBB), massive Machine Type Communication (mMTC), and Ultra Reliable and Low Latency Communication (URLLC), in a single technology framework.

For 5G user equipment (UE), initial random access plays an important role in fulfilling the latency requirements. However, for some cell-edge UEs, delay may occur due to the poor connectivity in the random access procedure. To extend the coverage of 5G service, techniques for enhanced coverage UEs are studied. For enhanced coverage UEs, physical random access channel (PRACH) resources should be well designed for UEs with different pathlosses values.

### [Brief Description of the Drawings]

Figure 1 is a conceptual diagram of a wireless communication system;
Figure 2 is an example showing the relationship between subcarrier-spacing configuration u, the number of OFDM symbols per slot N^{slot}_{symb}, and the CP configuration;
Figure 3 is a diagram showing an example of a method of configuring a resource grid;
Figure 4 is a diagram showing a configuration example of a resource grid 3001;
Figure 5 is a schematic block diagram showing a configuration example of the base station device;
Figure 6 is a schematic block diagram showing a configuration example of the terminal device;
Figure 7 is a diagram showing a configuration example of an SS/PBCH block;
Figure 8 is a diagram showing an example of the monitoring occasion of the search-space-set;
Figure 9 is a diagram illustrating an example of a contention-based random access procedure according to the embodiment of the present invention;
Figure 10 is a diagram illustrating an example of a contention-free random access procedure according to the embodiment of the present invention;
Figure 11 is a diagram illustrating an example of allocation of SSB indexes to PRACH occasions according to the present embodiment;
Figure 12 is a diagram showing an example of PRACH repetition using a plurality of PRACH occasions;
Figure 13 is an example of the higher-layer parameters to identify a set of PRACH preambles and PRACH occasions available for a PRACH repetition;
Figure 14 is an example of a higher-layer parameter *FeatureCombination*;
Figure 15 is an example of ROs for multiple PRACH transmission indicated by the RO indication field as PDCCH order;
Figure 16 is an example of a method for a terminal device 1;
Figure 17 is an example of a method for a base station device 3.

### [DETAILED DESCRIPTION]

A user equipment (UE) is described. The UE may comprise reception circuitry configured to receive a downlink control information (DCI) with a DCI format for random access procedure initiated by physical downlink control channel (PDCCH) order, transmission circuitry configured to transmit N (N>1) repetitions of physical random access channel (PRACH) transmission using N random access channel (RACH) occasions within a RACH attempt, based on the DCI, wherein the DCI format includes a first field which indicates a random access preamble index used for the PRACH transmission, a second field which indicates a synchronization signal/physical broadcast channel (SS/PBCH) index, and a third field which indicates the N RACH occasions associated with a SS/PBCH indicated by the SS/PBCH index for the N repetitions of the PRACH transmission.

A base station is described. The base station comprise transmission circuitry configured to transmit a downlink control information (DCI) with a DCI format for random access procedure initiated by physical downlink control channel (PDCCH) order, reception circuitry configured to receive N (N>1) repetitions of a physical random access channel (PRACH) transmission using N random access channel (RACH) occasions within a RACH attempt, wherein the DCI format includes a first field which indicates a random access preamble index used for the PRACH transmission, a second field which indicates a synchronization signal/physical broadcast channel (SS/PBCH) index, and a third field which indicates the N RACH occasions associated with a SS/PBCH indicated by the SS/PBCH index for the N repetitions of the PRACH transmission.

A method for a base station is described. The method may comprise transmitting a downlink control information (DCI) with a DCI format for random access procedure initiated by physical downlink control channel (PDCCH) order, receiving N (N>1) repetitions of a physical random access channel (PRACH) transmission using N random access channel (RACH) occasions within a RACH attempt, wherein the DCI format includes a first field which indicates a random access preamble index used for the PRACH transmission, a second field which indicates a synchronization signal/physical broadcast channel (SS/PBCH) index, and a third field which indicates the N RACH occasions associated with a SS/PBCH indicated by the SS/PBCH index for the N repetitions of the multiple PRACH transmission.

floor (CX) may be a floor function for real number CX. For example, floor (CX) may be a function that provides the largest integer within a range that does not exceed the real number CX. ceil (DX) may be a ceiling function to a real number DX. For example, ceil (DX) may be a function that provides the smallest integer within the range not less than the real number DX. mod (EX, FX) may be a function that provides the remainder obtained by dividing EX by FX. mod (EX, FX) may be a function that provides a value which corresponds to the remainder of dividing EX by FX. It is exp (GX) = e ^ GX. Here, e is Napier number. (HX) ^ (IX) indicates IX to the power of HX.

In a wireless communication system according to one aspect of the present embodiment, at least OFDM (Orthogonal Frequency Division Multiplex) is used. An OFDM symbol is a unit of time domain of the OFDM. The OFDM symbol includes at least one or more subcarriers. An OFDM symbol is converted to a time-continuous signal in baseband signal generation. In downlink, at least CP-OFDM (Cyclic Prefix-Orthogonal Frequency Division Multiplex) is used. In uplink, either CP-OFDM or DFT-s-OFDM (Discrete Fourier Transform-spread-Orthogonal Frequency Division Multiplex) is used. DFT-s-OFDM may be given by applying transform precoding to CP-OFDM. CP-OFDM is OFDM using CP (Cyclic Prefix).

The OFDM symbol may be a designation including a CP added to the OFDM symbol. That is, an OFDM symbol may be configured to include the OFDM symbol and a CP added to the OFDM symbol.

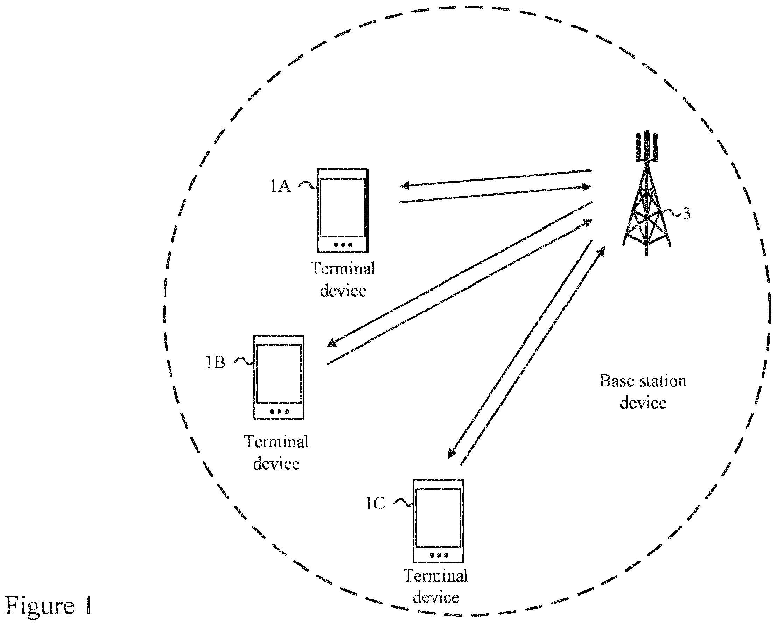

Figure 1 is a conceptual diagram of a wireless communication system. In Figure 1, the wireless communication system includes at least terminal device 1A to 1C and a base station device 3 (BS # 3: Base station # 3). Hereinafter, the terminal devices 1A to 1C are also referred to as a terminal device 1 (UE # 1: User Equipment # 1).

The base station device 3 may be configured to include one or more transmission devices (or transmission points, transmission devices, reception devices, transmission points, reception points). When the base station device 3 is configured by a plurality of transmission devices, each of the plurality of transmission devices may be arranged at a different position.

The base station device 3 may provide one or more serving cells. A serving cell may be defined as a set of resources used for wireless communication. A serving cell is also referred to as a cell.

A serving cell may be configured to include at least one downlink component carrier (downlink carrier) and/or one uplink component carrier (uplink carrier). A serving cell may be configured to include at least two or more downlink component carriers and/or two or more uplink component carriers. A downlink component carrier and an uplink component carrier are also referred to as component carriers (carriers). The uplink component carrier can be used for sidelink communication.

For example, one resource grid may be provided for one component carrier. For example, one resource grid may be provided for one component carrier and a subcarrier-spacing configuration u. A subcarrier-spacing configuration u is also referred to as numerology. A resource grid includes N^{slze, u}_{grid, x}N^{RB}_{sc} subcarriers. The resource grid starts from a common resource block with index N^{start, u}_{grid}. The common resource block with the index N^{start, u}_{grid} is also referred to as a reference point of the resource grid. The resource grid includes N^{subframe, u}_{symb} OFDM symbols. The subscript x indicates the transmission direction and indicates either downlink or uplink. One resource grid is provided for an antenna port p, a subcarrier-spacing configuration u, and a transmission direction x. The resource grid may be applied to downlink, uplink and/or sidelink.

Resource grid is also referred to as carrier.

N^{size, u}_{grid,x} and N^{start, u}_{grid} are given based at least on an RRC parameter (e.g. referred to as RRC parameter CarrierBandwidth). The RRC parameter is used to define one or more SCS (SubCarrier-Spacing) specific carriers. One resource grid corresponds to one SCS specific carrier. One component carrier may comprise one or more SCS specific carriers. The SCS specific carrier may be included in a system information block (SIB). For each SCS specific carrier, a subcarrier-spacing configuration u may be provided.

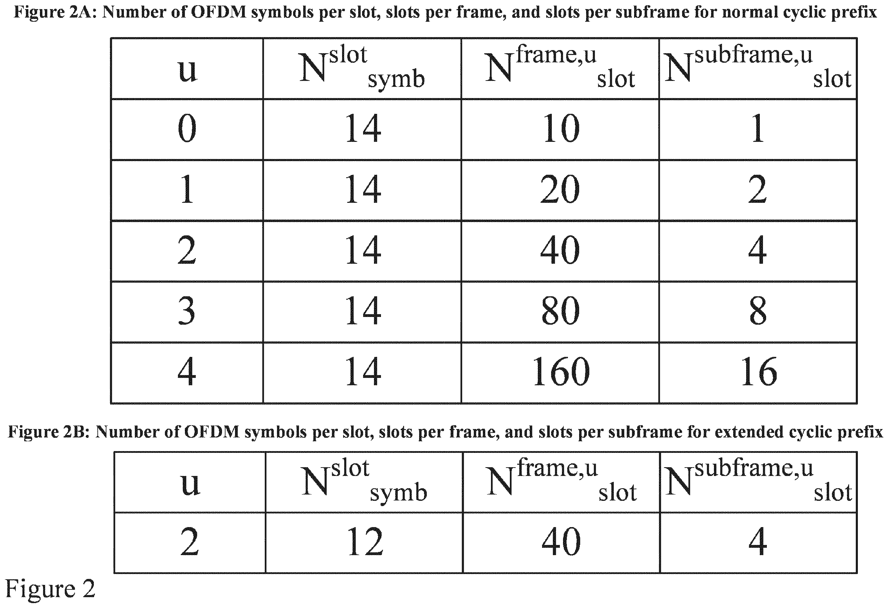

Figure 2 is an example showing the relationship between subcarrier-spacing configuration u, the number of OFDM symbols per slot N^{slot}_{symb}, and the CP configuration . In Figure 2A, for example, when the subcarrier-spacing configuration u is set to 2 and the CP configuration is set to normal CP (normal cyclic prefix), N^{slot}_{symb} = 14, N^{frame, u}ₛₗₒₜ = 40, N^{subframe, u}ₛₗₒₜ = 4. Further, in Figure 2B, for example, when the subcarrier-spacing configuration u is set to 2 and the CP configuration is set to an extended CP (extended cyclic prefix), N^{slot}_{symb} = 12, N^{frame, u}ₛₗₒₜ = 40, N^{subframe, u}ₛₗₒₜ = 4. The subcarrier-spacing configuration u may be applied to downlink, uplink and/or sidelink.

In the wireless communication system , a time unit T_{c} may be used to represent the length of the time domain. The time unit T_{c} is T_{c} = 1 / (dfₘₐₓ ^{∗} N_{f}). It is dfₘₐₓ = 480 kHz. It is N_{f} = 4096. The constant k is k = dfₘₐₓ ^{∗} N_{f} / (df_{ref}N_{f, ref}) = 64. df_{ref} is 15 kHz. N_{f, ref} is 2048.

Transmission of signals in the downlink and/or transmission of signals in the uplink and/or transmission of signals in the sidelink may be organized into radio frames (system frames, frames) of length Tf. It is T_{f} = (dfₘₐₓ N_{f} / 100) * Tₛ = 10 ms. One radio frame is configured to include ten subframes. The subframe length is T_{sf} = (dfₘₐₓN_{f} / 1000) Tₛ = 1 ms. The number of OFDM symbols per subframe is N^{subframe, u}_{symb} = N^{slot}_{symb}N^{subframe, u}ₛₗₒₜ.

For a subcarrier-spacing configuration u, the number of slots included in a subframe and indexes may be given. For example, slot index n^{u}ₛ may be given in ascending order with an integer value ranging from 0 to N^{subframe,u}ₛₗₒₜ -1 in a subframe. For subcarrier-spacing configuration u, the number of slots included in a radio frame and indexes of slots included in the radio frame may be given. Also, the slot index n^{u}_{s, f} may be given in ascending order with an integer value ranging from 0 to N^{frame,u}ₛₗₒₜ -1 in the radio frame. Consecutive N^{slot}_{symb} OFDM symbols may be included in one slot. It is N^{slot}_{symb} = 14.

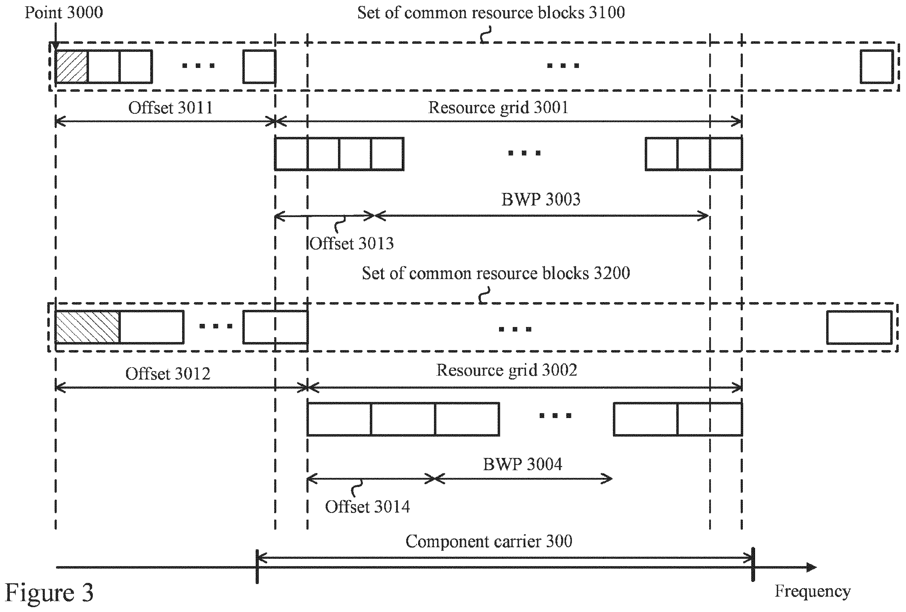

Figure 3 is a diagram showing an example of a method of configuring a resource grid. The horizontal axis in Figure 3 indicates frequency domain. Figure 3 shows a configuration example of a resource grid of subcarrier-spacing configuration u = u₁ in the component carrier 300 and a configuration example of a resource grid of subcarrier-spacing configuration u = u₂ in a component carrier. One or more subcarrier-spacing configuration may be set for a component carrier. Although it is assumed in Figure 3 that u₁ = u₂-1, various aspects of this embodiment are not limited to the condition of u₁ = u₂-1.

The component carrier 300 is a band having a predetermined width in the frequency domain.

Point 3000 is an identifier for identifying a subcarrier. Point 3000 is also referred to as point A. The common resource block (CRB) set 3100 is a set of common resource blocks for the subcarrier-spacing configuration u₁.

Among the common resource block-set 3100, the common resource block including the point 3000 (the block indicated by the upper right diagonal line in Figure 3) is also referred to as a reference point of the common resource block-set 3100. The reference point of the common resource block-set 3100 may be a common resource block with index 0 in the common resource block-set 3100.

The offset 3011 is an offset from the reference point of the common resource block-set 3100 to the reference point of the resource grid 3001. The offset 3011 is indicated by the number of common resource blocks which is relative to the subcarrier-spacing configuration u₁. The resource grid 3001 includes N^{size,u}_{grid1,x} common resource blocks starting from the reference point of the resource grid 3001.

The offset 3013 is an offset from the reference point of the resource grid 3001 to the reference point (N^{start,u}_{BWP,i1}) of the BWP (BandWidth Part) 3003 of the index i1.

Common resource block-set 3200 is a set of common resource blocks with respect to subcarrier-spacing configuration u₂.

A common resource block including the point 3000 (a block indicated by a upper left diagonal line in Figure 3) in the common resource block-set 3200 is also referred to as a reference point of the common resource block-set 3200. The reference point of the common resource block-set 3200 may be a common resource block with index 0 in the common resource block-set 3200.

The offset 3012 is an offset from the reference point of the common resource block-set 3200 to the reference point of the resource grid 3002. The offset 3012 is indicated by the number of common resource blocks for subcarrier-spacing configuration u = u₂. The resource grid 3002 includes N^{size,u}_{grid2,x} common resource blocks starting from the reference point of the resource grid 3002.

The offset 3014 is an offset from the reference point of the resource grid 3002 to the reference point (N^{start,u}_{BWP,i2}) of the BWP 3004 with index i₂.

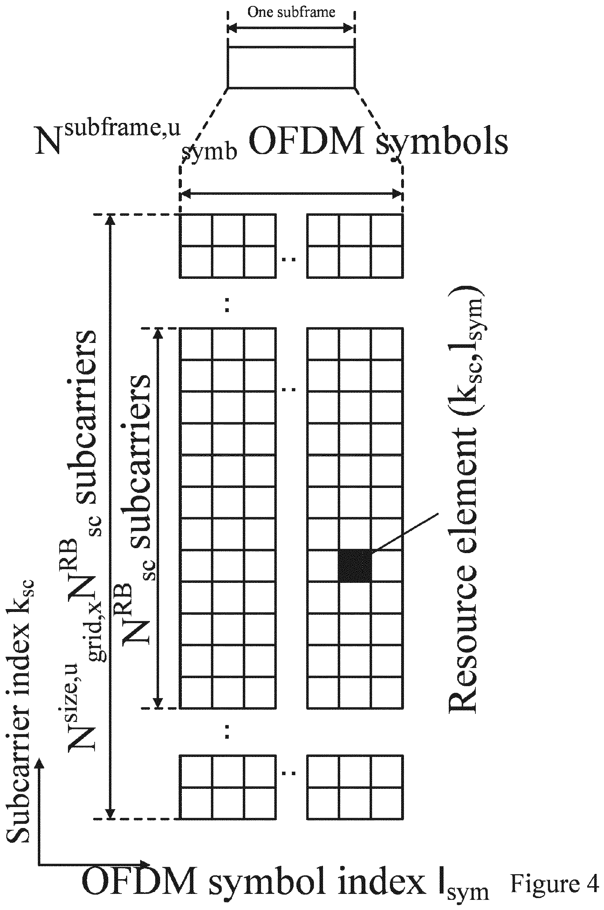

Figure 4 is a diagram showing a configuration example of a resource grid 3001. In the resource grid of Figure 4, the horizontal axis indicates OFDM symbol index l_{sym}, and the vertical axis indicates the subcarrier index k_{sc}. The resource grid 3001 includes N^{size,u}_{grid1,}xN^{RB}_{sc} subcarriers, and includes N^{subframes,u}_{symb} OFDM symbols. A resource specified by the subcarrier index k_{sc} and the OFDM symbol index l_{sym} in a resource grid is also referred to as a resource element (RE).

A resource block (RB) includes N^{RB}_{sc} consecutive subcarriers. A resource block is a generic name of a common resource block, a physical resource block (PRB), and a virtual resource block (VRB). It is N^{RB}_{sc} = 12.

A resource block unit is a set of resources that corresponds to one OFDM symbol in one resource block. That is, one resource block unit includes 12 resource elements which corresponds to one OFDM symbol in one resource block.

Common resource blocks for a subcarrier-spacing configuration u are indexed in ascending order from 0 in the frequency domain in a common resource block-set. The common resource block with index 0 for the subcarrier-spacing configuration u includes (or collides with, matches) the point 3000. The index n^{u}_{CRB} of the common resource block with respect to the subcarrier-spacing configuration u satisfies the relationship of n^{u}_{CRB} = ceil (k_{sc} / N^{RB}_{sc}). The subcarrier with k_{sc} = 0 is a subcarrier with the same center frequency as the center frequency of the subcarrier which corresponds to the point 3000.

Physical resource blocks for a subcarrier-spacing configuration u are indexed in ascending order from 0 in the frequency domain in a BWP. The index n^{u}_{PRB} of the physical resource block with respect to the subcarrier-spacing configuration u satisfies the relationship of n^{u}_{CRB} = n^{u}_{PRB} + N^{start,u}_{BWP,i}. The N^{start,u}_{BWP,i} indicates the reference point of BWP with index i.

A BWP is defined as a subset of common resource blocks included in the resource grid. The BWP includes N^{slze, u}_{BWP,i} common resource blocks starting from the reference points N^{start,u}_{BWP,i}. A BWP for the downlink component carrier is also referred to as a downlink BWP. A BWP for the uplink component carrier is also referred to as an uplink BWP. A BWP for the sidelink is also referred to as a sidelink BWP.

An antenna port is defined such that the channel over which a symbol on the antenna port is conveyed can be inferred from the channel over which another symbol on the same antenna port is conveyed. For example, the channel may correspond to a physical channel. For example, the symbols may correspond to OFDM symbols. For example, the symbols may correspond to resource block units. For example, the symbols may correspond to resource elements.

Two antenna ports are said to be QCL (Quasi Co-Located) if the large-scale properties of the channel over which a symbol on one antenna port is conveyed can be inferred from the channel over which a symbol on the other antenna port is conveyed. The large-scale properties include one or more of delay spread, Doppler spread, Doppler shift, average gain, average delay, and spatial Rx parameters.

Carrier aggregation may be communication using a plurality of aggregated serving cells. Carrier aggregation may be communication using a plurality of aggregated component carriers. Carrier aggregation may be communication using a plurality of aggregated downlink component carriers. Carrier aggregation may be communication using a plurality of aggregated uplink component carriers.

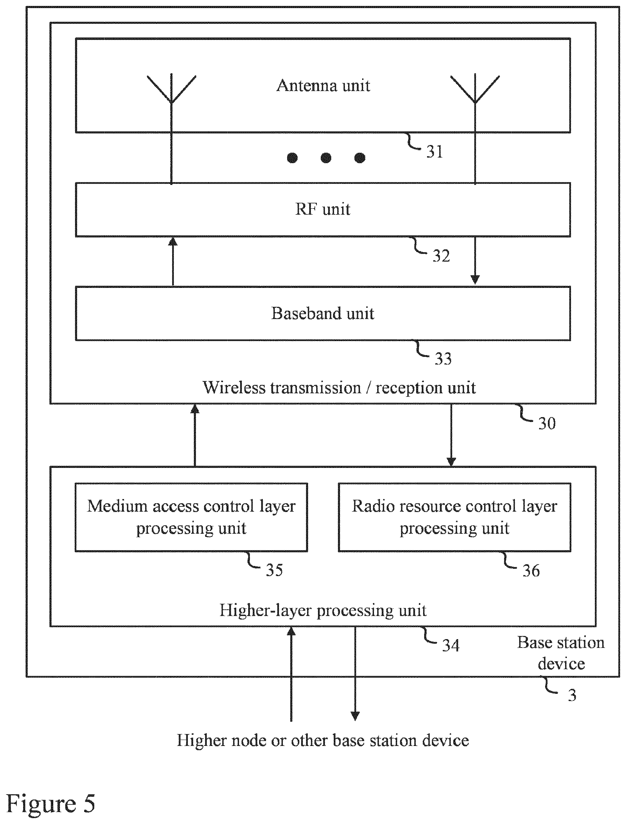

Figure 5 is a schematic block diagram showing a configuration example of the base station device 3. As shown in Figure 5, the base station device 3 includes at least a part or all of the wireless transmission / reception unit (physical layer processing unit) 30 and the higher-layer processing unit 34. The wireless transmission / reception unit 30 includes at least a part or all of the antenna unit 31, the RF unit 32 (Radio Frequency unit 32), and the baseband unit 33. The higher-layer processing unit 34 includes at least a part or all of the medium access control layer processing unit 35 and the radio resource control (RRC) layer processing unit 36.

The wireless transmission / reception unit 30 includes at least a part of or all of a wireless transmission unit 30a and a wireless reception unit 30b. The configuration of the baseband unit 33 included in the wireless transmission unit 30a and the configuration of the baseband unit 33 included in the wireless reception unit 30b may be the same or different. The configuration of the RF unit 32 included in the wireless transmission unit 30a and the configuration of the RF unit 32 included in the wireless reception unit 30b may be the same or different. The configuration of the antenna unit 31 included in the wireless transmission unit 30a and the configuration of the antenna unit 31 included in the wireless reception unit 30b may be the same or different.

The higher-layer processing unit 34 provides downlink data (a transport block) to the wireless transmission / reception unit 30 (or the wireless transmission unit 30a). The higher-layer processing unit 34 performs processing of a medium access control (MAC) layer, a packet data convergence protocol layer (PDCP layer), a radio link control layer (RLC layer) and/or an RRC layer.

The medium access control layer processing unit 35 included in the higher-layer processing unit 34 performs processing of the MAC layer.

The radio resource control layer processing unit 36 included in the higher-layer processing unit 34 performs the process of the RRC layer. The radio resource control layer processing unit 36 manages various configuration information / parameters (RRC parameters) of the terminal device 1. The radio resource control layer processing unit 36 configures an RRC parameter based on the RRC message received from the terminal device 1.

The wireless transmission / reception unit 30 (or the wireless transmission unit 30a) performs processing such as encoding and modulation. The wireless transmission / reception unit 30 (or the wireless transmission unit 30a) generates a physical signal by encoding and modulating the downlink data. The wireless transmission / reception unit 30 (or the wireless transmission unit 30a) converts OFDM symbols in the physical signal to a baseband signal by conversion to a time-continuous signal. The wireless transmission / reception unit 30 (or the wireless transmission unit 30a) transmits the baseband signal (or the physical signal) to the terminal device 1 via radio frequency. The wireless transmission / reception unit 30 (or the wireless transmission unit 30a) may arrange the baseband signal (or the physical signal) on a component carrier and transmit the baseband signal (or the physical signal) to the terminal device 1.

The wireless transmission / reception unit 30 (or the wireless reception unit 30b) performs processing such as demodulation and decoding. The wireless transmission / reception unit 30 (or the wireless reception unit 30b) separates, demodulates and decodes the received physical signal, and provides the decoded information to the higher-layer processing unit 34. The wireless transmission / reception unit 30 (or the wireless reception unit 30b) may perform the channel access procedure prior to the transmission of the physical signal.

The RF unit 32 demodulates the physical signal received via the antenna unit 31 into a baseband signal (down convert), and/or removes extra frequency components. The RF unit 32 provides the processed analog signal to the baseband unit 33.

The baseband unit 33 converts an analog signal (signals on radio frequency) input from the RF unit 32 into a digital signal (a baseband signal). The baseband unit 33 separates a portion which corresponds to CP (Cyclic Prefix) from the digital signal. The baseband unit 33 performs Fast Fourier Transformation (FFT) on the digital signal from which the CP has been removed. The baseband unit 33 provides the physical signal in the frequency domain.

The baseband unit 33 performs Inverse Fast Fourier Transformation (IFFT) on downlink data to generate an OFDM symbol, adds a CP to the generated OFDM symbol, generates a digital signal (baseband signal), and convert the digital signal into an analog signal. The baseband unit 33 provides the analog signal to the RF unit 32.

The RF unit 32 removes extra frequency components from the analog signal (signals on radio frequency) input from the baseband unit 33, up-converts the analog signal to a radio frequency, and transmits it via the antenna unit 31. The RF unit 32 may have a function of controlling transmission power. The RF unit 32 is also referred to as a transmission power control unit.

At least one or more serving cells (or one or more component carriers, one or more downlink component carriers, one or more uplink component carriers) may be configured for the terminal device 1.

Each of the serving cells set for the terminal device 1 may be any of PCell (Primary cell), PSCell (Primary SCG cell), and SCell (Secondary Cell).

A PCell is a serving cell included in a MCG (Master Cell Group). A PCell is a cell (implemented cell) which performs an initial connection establishment procedure or a connection re-establishment procedure by the terminal device 1.

A PSCell is a serving cell included in a SCG (Secondary Cell Group). A PSCell is a serving cell in which random-access is performed by the terminal device 1 in a reconfiguration procedure with synchronization (Reconfiguration with synchronization).

A SCell may be included in either a MCG or a SCG.

The serving cell group (cell group) is a designation including at least MCG and SCG. The serving cell group may include one or more serving cells (or one or more component carriers). One or more serving cells (or one or more component carriers) included in the serving cell group may be operated by carrier aggregation.

One or more downlink BWPs may be configured for each serving cell (or each downlink component carrier). One or more uplink BWPs may be configured for each serving cell (or each uplink component carrier).

Among the one or more downlink BWPs set for the serving cell (or the downlink component carrier), one downlink BWP may be set as an active downlink BWP (or one downlink BWP may be activated). Among the one or more uplink BWPs set for the serving cell (or the uplink component carrier), one uplink BWP may be set as an active uplink BWP (or one uplink BWP may be activated).

A PDSCH, a PDCCH, a CSI-RS and other physical downlink channels/signals may be received in the active downlink BWP. The terminal device 1 may receive the PDSCH, the PDCCH, and the CSI-RS in the active downlink BWP. Additionally, in some case, the terminal device 1 may receive the CSI-RS or other physical downlink channels/signals (e.g., Positioning RS (PRS)) in the downlink BWP that is not active or in the cell that is not a serving cell. A PUCCH, a PUSCH, an SRS and other physical uplink channels/signals may be sent on the active uplink BWP. The terminal device 1 may transmit the PUCCH, the PUSCH, the SRS and other physical uplink channels/signals in the active uplink BWP. Additionally, in some case, the terminal device 1 may receive the SRS or other physical uplink channels/signals (e.g., SRS for Positioning) in the uplink BWP that is not active or in the cell that is not a serving cell. The active downlink BWP and the active uplink BWP are also referred to as active BWP.

Downlink BWP switching deactivates an active downlink BWP and activates one of inactive downlink BWPs which are other than the active downlink BWP. The downlink BWP switching may be controlled by a BWP field included in a downlink control information. The downlink BWP switching may be controlled based on higher-layer parameters.

Uplink BWP switching is used to deactivate an active uplink BWP and activate any inactive uplink BWP which is other than the active uplink BWP. Uplink BWP switching may be controlled by a BWP field included in a downlink control information. The uplink BWP switching may be controlled based on higher-layer parameters.

Among the one or more downlink BWPs set for the serving cell, two or more downlink BWPs may not be set as active downlink BWPs. For the serving cell, one downlink BWP may be active at a certain time.

Among the one or more uplink BWPs set for the serving cell, two or more uplink BWPs may not be set as active uplink BWPs. For the serving cell, one uplink BWP may be active at a certain time.

The aforementioned procedures for Uplink BWP may be applicable to Sidelink BWP.

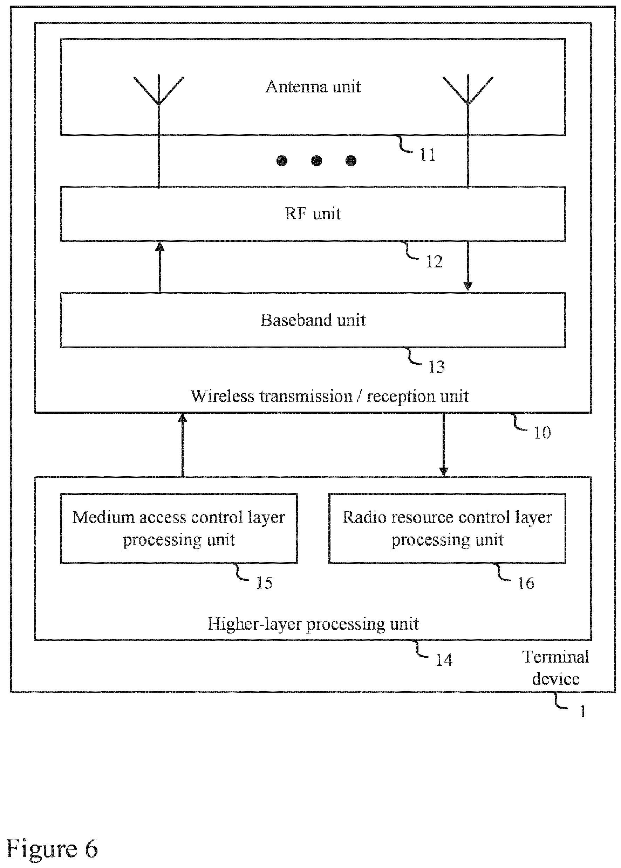

Figure 6 is a schematic block diagram showing a configuration example of the terminal device 1 (including target UE 4 and anchor UE 5 described later). As shown in Figure 6, the terminal device 1 includes at least a part or all of the wireless transmission / reception unit (physical layer processing unit) 10 and the higher-layer processing unit 14. The wireless transmission / reception unit 10 includes at least a part or all of the antenna unit 11, the RF unit 12, and the baseband unit 13. The higher-layer processing unit 14 includes at least a part or all of the medium access control layer processing unit 15 and the radio resource control layer processing unit 16.

The wireless transmission / reception unit 10 includes at least a part of or all of a wireless transmission unit 10a and a wireless reception unit 10b. The configuration of the baseband unit 13 included in the wireless transmission unit 10a and the configuration of the baseband unit 13 included in the wireless reception unit 10b may be the same or different. The configuration of the RF unit 12 included in the wireless transmission unit 10a and the RF unit 12 included in the wireless reception unit 10b may be the same or different. The configuration of the antenna unit 11 included in the wireless transmission unit 10a and the configuration of the antenna unit 11 included in the wireless reception unit 10b may be the same or different.

The higher-layer processing unit 14 provides uplink or sidelink data (a transport block) to the wireless transmission / reception unit 10 (or the wireless transmission unit 10a). The higher-layer processing unit 14 performs processing of a MAC layer, a packet data integration protocol layer, a radio link control layer, and/or an RRC layer. The higher-layer processing unit 14 may also performs processing of a MAC layer, a packet data integration protocol layer, a radio link control layer, and/or an RRC layer for PC5.

The medium access control layer processing unit 15 included in the higher-layer processing unit 14 performs processing of the MAC layer.

The radio resource control layer processing unit 16 included in the higher-layer processing unit 14 performs the process of the RRC layer and/or the PC5 RRC (PC5-RRC) process. The radio resource control layer processing unit 16 manages various configuration information / parameters (RRC parameters and/or PC5 RRC (PC5-RRC) parameters) of the terminal device 1. The radio resource control layer processing unit 16 configures RRC parameters based on the RRC message received from the base station device 3 and/or PC5 RRC parameters based on the PC5 RRC (PC5-RRC) message received from another terminal device.

The wireless transmission / reception unit 10 (or the wireless transmission unit 10a) performs processing such as encoding and modulation. The wireless transmission / reception unit 10 (or the wireless transmission unit 10a) generates a physical signal by encoding and modulating the uplink data and/or sidelink data. The wireless transmission / reception unit 10 (or the wireless transmission unit 10a) converts OFDM symbols in the physical signal to a baseband signal by conversion to a time-continuous signal. The wireless transmission / reception unit 10 (or the wireless transmission unit 10a) transmits the baseband signal (or the physical signal) to the base station device 3 or to another terminal device via radio frequency. The wireless transmission / reception unit 10 (or the wireless transmission unit 10a) may arrange the baseband signal (or the physical signal) on a BWP (active uplink BWP) and transmit the baseband signal (or the physical signal) to the base station device 3.

The wireless transmission / reception unit 10 (or the wireless reception unit 10b) performs processing such as demodulation and decoding. The wireless transmission / reception unit 10 (or the wireless reception unit 10b) may receive a physical signal in a BWP (active downlink BWP) of a serving cell and/or in a Sidelink BWP. The wireless transmission / reception unit 10 (or the wireless reception unit 10b) separates, demodulates and decodes the received physical signal, and provides the decoded information to the higher-layer processing unit 14. The wireless transmission / reception unit 10 (or the wireless reception unit 10b) may perform the channel access procedure prior to the transmission of the physical signal.

The RF unit 12 demodulates the physical signal received via the antenna unit 11 into a baseband signal (down convert), and/or removes extra frequency components. The RF unit 12 provides the processed analog signal to the baseband unit 13.

The baseband unit 13 converts an analog signal (signals on radio frequency) input from the RF unit 12 into a digital signal (a baseband signal). The baseband unit 13 separates a portion which corresponds to CP from the digital signal, performs fast Fourier transformation on the digital signal from which the CP has been removed, and provides the physical signal in the frequency domain.

The baseband unit 13 performs inverse fast Fourier transformation on uplink data to generate an OFDM symbol, adds a CP to the generated OFDM symbol, generates a digital signal (baseband signal), and convert the digital signal into an analog signal. The baseband unit 13 provides the analog signal to the RF unit 12.

The RF unit 12 removes extra frequency components from the analog signal (signals on radio frequency) input from the baseband unit 13, up-converts the analog signal to a radio frequency, and transmits it via the antenna unit 11 The RF unit 12 may have a function of controlling transmission power. The RF unit 12 is also referred to as a transmission power control unit.

Hereinafter, physical signals (signals) will be described.

Physical signal is a generic term for downlink physical channels, downlink physical signals, uplink physical channels, uplink physical signals, sidelink physical channels, and sidelink physical signals. The physical channel is a generic term for downlink physical channels, uplink physical channels and sidelink physical channels.

An uplink physical channel may correspond to a set of resource elements that carry information originating from the higher-layer and/or uplink control information. The uplink physical channel may be a physical channel used in an uplink component carrier. The uplink physical channel may be transmitted by the terminal device 1. The uplink physical channel may be received by the base station device 3. In the wireless communication system according to one aspect of the present embodiment, at least part or all of PUCCH (Physical Uplink Control CHannel), PUSCH (Physical Uplink Shared CHannel), and PRACH (Physical Random Access CHannel) may be used.

A PUCCH may be used to transmit uplink control information (UCI). The PUCCH may be sent to deliver (transmission, convey) uplink control information. The uplink control information may be mapped to (or arranged in) the PUCCH. The terminal device 1 may transmit PUCCH in which uplink control information is arranged. The base station device 3 may receive the PUCCH in which the uplink control information is arranged.

Uplink control information (uplink control information bit, uplink control information sequence, uplink control information type) includes at least part or all of channel state information (CSI), scheduling request (SR), and HARQ-ACK (Hybrid Automatic Repeat request ACKnowledgement).

Channel state information is conveyed by using channel state information bits or a channel state information sequence. Scheduling request is also referred to as a scheduling request bit or a scheduling request sequence. HARQ-ACK information is also referred to as a HARQ-ACK information bit or a HARQ-ACK information sequence.

HARQ-ACK information may include HARQ-ACK status which corresponds to a transport block (TB: Transport block, MAC PDU: Medium Access Control Protocol Data Unit, DL-SCH: Downlink-Shared Channel, UL-SCH: Uplink-Shared Channel, PDSCH: Physical Downlink Shared CHannel, PUSCH: Physical Uplink Shared CHannel). The HARQ-ACK status may indicate ACK (acknowledgement) or NACK (negative-acknowledgement) corresponding to the transport block. The ACK may indicate that the transport block has been successfully decoded. The NACK may indicate that the transport block has not been successfully decoded. The HARQ-ACK information may include a HARQ-ACK codebook that includes one or more HARQ-ACK status (or HARQ-ACK bits).

For example, the correspondence between the HARQ-ACK information and the transport block may mean that the HARQ-ACK information and the PDSCH used for transmission of the transport block correspond.

HARQ-ACK status may indicate ACK or NACK which correspond to one CBG (Code Block Group) included in the transport block.

The scheduling request may at least be used to request PUSCH (or UL-SCH) resources for new transmission. The scheduling request may be used to indicate either a positive SR or a negative SR. The fact that the scheduling request indicates a positive SR is also referred to as "a positive SR is sent". The positive SR may indicate that the PUSCH (or UL-SCH) resource for initial transmission is requested by the terminal device 1. A positive SR may indicate that a higher-layer is to trigger a scheduling request. The positive SR may be sent when the higher-layer instructs to send a scheduling request. The fact that the scheduling request bit indicates a negative SR is also referred to as "a negative SR is sent". A negative SR may indicate that the PUSCH (or UL-SCH) resource for initial transmission is not requested by the terminal device 1. A negative SR may indicate that the higher-layer does not trigger a scheduling request. A negative SR may be sent if the higher-layer is not instructed to send a scheduling request.

The channel state information may include at least part or all of a channel quality indicator (CQI), a precoder matrix indicator (PMI), and a rank indicator (RI). CQI is an indicator related to channel quality (e.g., propagation quality) or physical channel quality, and PMI is an indicator related to a precoder. RI is an indicator related to transmission rank (or the number of transmission layers).

Channel state information may be provided at least based on receiving one or more physical signals (e.g., one or more CSI-RSs) used at least for channel measurement. The channel state information may be selected by the terminal device 1 at least based on receiving one or more physical signals used for channel measurement. Channel measurements may include interference measurements.

A PUCCH may correspond to a PUCCH format. A PUCCH may be a set of resource elements used to convey a PUCCH format. A PUCCH may include a PUCCH format. A PUCCH format may include UCI.

A PUSCH may be used to transmit uplink data (a transport block) and/or uplink control information. A PUSCH may be used to transmit uplink data (a transport block) corresponding to a UL-SCH and/or uplink control information. A PUSCH may be used to convey uplink data (a transport block) and/or uplink control information. A PUSCH may be used to convey uplink data (a transport block) corresponding to a UL-SCH and/or uplink control information. Uplink data (a transport block) may be arranged in a PUSCH. Uplink data (a transport block) corresponding to UL-SCH may be arranged in a PUSCH. Uplink control information may be arranged to a PUSCH. The terminal device 1 may transmit a PUSCH in which uplink data (a transport block) and/or uplink control information is arranged. The base station device 3 may receive a PUSCH in which uplink data (a transport block) and/or uplink control information is arranged.

APRACH may be used to transmit a random-access preamble. The PRACH may be used to convey a random-access preamble. The sequence x_{u, v} (n) of the PRACH is defined by x_{u, v} (n) = xᵤ (mod (n + Cᵥ, L_{RA})). The xᵤ may be a ZC sequence (Zadoff-Chu sequence). The xᵤ may be defined by xᵤ = exp (-jpui (i + 1) / L_{RA}). The j is an imaginary unit. The p is the circle ratio. The Cᵥ corresponds to cyclic shift of the PRACH. L_{RA} corresponds to the length of the PRACH. The L_{RA} may be 839 or 139 or another value. The i is an integer in the range of 0 to L_{RA}-1. The u is a sequence index for the PRACH. The terminal device 1 may transmit the PRACH. The base station device 3 may receive the PRACH.

For a given PRACH opportunity, 64 random-access preambles are defined. The random-access preamble is specified (determined, given) at least based on the cyclic shift Cᵥ of the PRACH and the sequence index u for the PRACH.

An uplink physical signal may correspond to a set of resource elements. The uplink physical signal may not carry information generated in the higher-layer. The uplink physical signal may be a physical signal used in the uplink component carrier. The terminal device 1 may transmit an uplink physical signal. The base station device 3 may receive the uplink physical signal. In the radio communication system according to one aspect of the present embodiment, at least a part or all of UL DMRS (UpLink Demodulation Reference Signal), SRS (Sounding Reference Signal), UL PTRS (UpLink Phase Tracking Reference Signal) may be used.

UL DMRS is a generic name of a DMRS for a PUSCH and a DMRS for a PUCCH.

A set of antenna ports of a DMRS for a PUSCH (a DMRS associated with a PUSCH, a DMRS included in a PUSCH, a DMRS which corresponds to a PUSCH) may be given based on a set of antenna ports for the PUSCH. That is, the set of DMRS antenna ports for the PUSCH may be the same as the set of antenna ports for the PUSCH.

Transmission of a PUSCH and transmission of a DMRS for the PUSCH may be indicated (or scheduled) by one DCI format. The PUSCH and the DMRS for the PUSCH may be collectively referred to as a PUSCH. Transmission of the PUSCH may be transmission of the PUSCH and the DMRS for the PUSCH.

A PUSCH may be estimated from a DMRS for the PUSCH. That is, propagation path of the PUSCH may be estimated from the DMRS for the PUSCH.

A set of antenna ports of a DMRS for a PUCCH (a DMRS associated with a PUCCH, a DMRS included in a PUCCH, a DMRS which corresponds to a PUCCH) may be identical to a set of antenna ports for the PUCCH.

Transmission of a PUCCH and transmission of a DMRS for the PUCCH may be indicated (or triggered) by one DCI format. The arrangement of the PUCCH in resource elements (resource element mapping) and/or the arrangement of the DMRS in resource elements for the PUCCH may be provided at least by one PUCCH format. The PUCCH and the DMRS for the PUCCH may be collectively referred to as PUCCH. Transmission of the PUCCH may be transmission of the PUCCH and the DMRS for the PUCCH.

A PUCCH may be estimated from a DMRS for the PUCCH. That is, propagation path of the PUCCH may be estimated from the DMRS for the PUCCH.

A downlink physical channel may correspond to a set of resource elements that carry information originating from the higher-layer and/or downlink control information. The downlink physical channel may be a physical channel used in the downlink component carrier. The base station device 3 may transmit the downlink physical channel. The terminal device 1 may receive the downlink physical channel. In the wireless communication system according to one aspect of the present embodiment, at least a part or all of PBCH (Physical Broadcast Channel), PDCCH (Physical Downlink Control Channel), and PDSCH (Physical Downlink Shared Channel) may be used.

The PBCH may be used to transmit a MIB (Master Information Block) and/or physical layer control information. The physical layer control information is a kind of downlink control information. The PBCH may be sent to deliver the MIB and/or the physical layer control information. A BCH may be mapped (or corresponding) to the PBCH. The terminal device 1 may receive the PBCH. The base station device 3 may transmit the PBCH. The physical layer control information is also referred to as a PBCH payload and a PBCH payload related to timing. The MIB may include one or more higher-layer parameters.

Physical layer control information includes 8 bits. The physical layer control information may include at least part or all of 0A to 0D. The 0A is radio frame information. The 0B is half radio frame information (half system frame information). The 0C is SS/PBCH block index information. The 0D is subcarrier offset information.

The radio frame information is used to indicate a radio frame in which the PBCH is transmitted (a radio frame including a slot in which the PBCH is transmitted). The radio frame information is represented by 4 bits. The radio frame information may be represented by 4 bits of a radio frame indicator. The radio frame indicator may include 10 bits. For example, the radio frame indicator may at least be used to identify a radio frame from index 0 to index 1023.

The half radio frame information is used to indicate whether the PBCH is transmitted in first five subframes or in second five subframes among radio frames in which the PBCH is transmitted. Here, the half radio frame may be configured to include five subframes. The half radio frame may be configured by five subframes of the first half of ten subframes included in the radio frame. The half radio frame may be configured by five subframes in the second half of ten subframes included in the radio frame.

The SS/PBCH block index information is used to indicate an SS/PBCH block index. The SS/PBCH block index information may be represented by 3 bits. The SS/PBCH block index information may consist of 3 bits of an SS/PBCH block index indicator. The SS/PBCH block index indicator may include 6 bits. The SS/PBCH block index indicator may at least be used to identify an SS/PBCH block from index 0 to index 63 (or from index 0 to index 3, from index 0 to index 7, from index 0 to index 9, from index 0 to index 19, etc.).

The subcarrier offset information is used to indicate subcarrier offset. The subcarrier offset information may be used to indicate the difference between the first subcarrier in which the PBCH is arranged and the first subcarrier in which the control resource set with index 0 is arranged.

A PDCCH may be used to transmit downlink control information (DCI). A PDCCH may be transmitted to deliver downlink control information. Downlink control information may be mapped to a PDCCH. The terminal device 1 may receive a PDCCH in which downlink control information is arranged. The base station device 3 may transmit the PDCCH in which the downlink control information is arranged.

Downlink control information may correspond to a DCI format. Downlink control information may be included in a DCI format. Downlink control information may be arranged in each field of a DCI format.

DCI format is a generic name for DCI format 0_0, DCI format 0_1, DCI format 1_0, and DCI format 1_1. Uplink DCI format is a generic name of the DCI format 0_0 and the DCI format 0_1. Downlink DCI format is a generic name of the DCI format 1_0 and the DCI format 1_1.

A PDSCH may be used to transmit one or more transport blocks. A PDSCH may be used to transmit one or more transport blocks which corresponds to a DL-SCH. A PDSCH may be used to convey one or more transport blocks. APDSCH may be used to convey one or more transport blocks which corresponds to a DL-SCH. One or more transport blocks may be arranged in a PDSCH. One or more transport blocks which corresponds to a DL-SCH may be arranged in a PDSCH. The base station device 3 may transmit a PDSCH. The terminal device 1 may receive the PDSCH.

Downlink physical signals may correspond to a set of resource elements. The downlink physical signals may not carry the information generated in the higher-layer. The downlink physical signals may be physical signals used in the downlink component carrier. A downlink physical signal may be transmitted by the base station device 3. The downlink physical signal may be transmitted by the terminal device 1. In the wireless communication system according to one aspect of the present embodiment, at least a part or all of an SS (Synchronization signal), DL DMRS (DownLink DeModulation Reference Signal), CSI-RS (Channel State Information-Reference Signal), and DL PTRS (DownLink Phase Tracking Reference Signal) may be used.

The synchronization signal may be used at least for the terminal device 1 to synchronize in the frequency domain and/or time domain for downlink. The synchronization signal is a generic name of PSS (Primary Synchronization Signal) and SSS (Secondary Synchronization Signal).

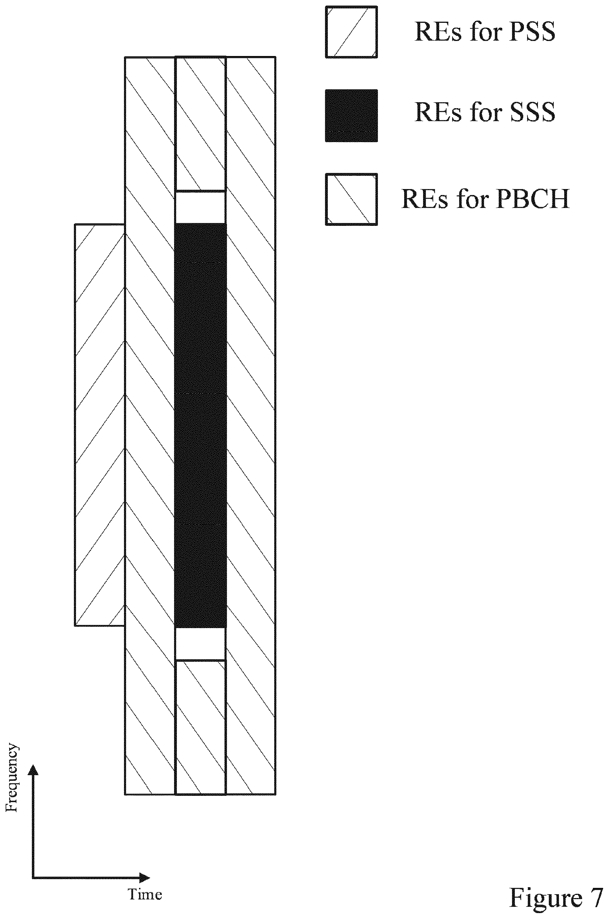

Figure 7 is a diagram showing a configuration example of an SS/PBCH block. In Figure 7, the horizontal axis indicates time domain (OFDM symbol index l_{sym}), and the vertical axis indicates frequency domain. The shaded blocks indicate a set of resource elements for a PSS. The blocks of grid lines indicate a set of resource elements for an SSS. Also, the blocks in the horizontal line indicate a set of resource elements for a PBCH and a set of resource elements for a DMRS for the PBCH (DMRS related to the PBCH, DMRS included in the PBCH, DMRS which corresponds to the PBCH).

As shown in Figure 7, the SS/PBCH block includes a PSS, an SSS, and a PBCH. The SS/PBCH block includes 4 consecutive OFDM symbols. The SS/PBCH block includes 240 subcarriers. The PSS is allocated to the 57th to 183rd subcarriers in the first OFDM symbol. The SSS is allocated to the 57th to 183rd subcarriers in the third OFDM symbol. The first to 56th subcarriers of the first OFDM symbol may be set to zero. The 184th to 240th subcarriers of the first OFDM symbol may be set to zero. The 49th to 56th subcarriers of the third OFDM symbol may be set to zero. The 184th to 192nd subcarriers of the third OFDM symbol may be set to zero. In the first to 240th subcarriers of the second OFDM symbol, the PBCH is allocated to subcarriers in which the DMRS for the PBCH is not allocated. In the first to 48th subcarriers of the third OFDM symbol, the PBCH is allocated to subcarriers in which the DMRS for the PBCH is not allocated. In the 193rd to 240th subcarriers of the third OFDM symbol, the PBCH is allocated to subcarriers in which the DMRS for the PBCH is not allocated. In the first to 240th subcarriers of the 4th OFDM symbol, the PBCH is allocated to subcarriers in which the DMRS for the PBCH is not allocated.

The antenna ports of a PSS, an SSS, a PBCH, and a DMRS for the PBCH in an SS/PBCH block may be identical.

A PBCH may be estimated from a DMRS for the PBCH For the DM-RS for the PBCH, the channel over which a symbol for the PBCH on an antenna port is conveyed can be inferred from the channel over which another symbol for the DM-RS on the antenna port is conveyed only if the two symbols are within a SS/PBCH block transmitted within the same slot, and with the same SS/PBCH block index.

DL DMRS is a generic name of DMRS for a PBCH, DMRS for a PDSCH, and DMRS for a PDCCH.

A set of antenna ports for a DMRS for a PDSCH (a DMRS associated with a PDSCH, a DMRS included in a PDSCH, a DMRS which corresponds to a PDSCH) may be given based on the set of antenna ports for the PDSCH. The set of antenna ports for the DMRS for the PDSCH may be the same as the set of antenna ports for the PDSCH.

Transmission of a PDSCH and transmission of a DMRS for the PDSCH may be indicated (or scheduled) by one DCI format. The PDSCH and the DMRS for the PDSCH may be collectively referred to as PDSCH. Transmitting a PDSCH may be transmitting a PDSCH and a DMRS for the PDSCH.

APDSCH may be estimated from a DMRS for the PDSCH. For a DM-RS associated with a PDSCH, the channel over which a symbol for the PDSCH on one antenna port is conveyed can be inferred from the channel over which another symbol for the DM-RS on the antenna port is conveyed only if the two symbols are within the same resource as the scheduled PDSCH, in the same slot, and in the same PRG (Precoding Resource Group).

Antenna ports for a DMRS for a PDCCH (a DMRS associated with a PDCCH, a DMRS included in a PDCCH, a DMRS which corresponds to a PDCCH) may be the same as an antenna port for the PDCCH.

A PDCCH may be estimated from a DMRS for the PDCCH. For a DM-RS associated with a PDCCH, the channel over which a symbol for the PDCCH on one antenna port is conveyed can be inferred from the channel over which another symbol for the DM-RS on the same antenna port is conveyed only if the two symbols are within resources for which the UE may assume the same precoding being used (i.e. within resources in a REG bundle).

A BCH (Broadcast CHannel), a UL-SCH (Uplink-Shared CHannel) and a DL-SCH (Downlink-Shared CHannel) are transport channels. A channel used in the MAC layer is called a transport channel. A unit of transport channel used in the MAC layer is also called transport block (TB) or MAC PDU (Protocol Data Unit). In the MAC layer, control of HARQ (Hybrid Automatic Repeat request) is performed for each transport block. The transport block is a unit of data delivered by the MAC layer to the physical layer. In the physical layer, transport blocks are mapped to codewords and modulation processing is performed for each codeword.

One UL-SCH and one DL-SCH may be provided for each serving cell. BCH may be given to PCell. BCH may not be given to PSCell and SCell.

A BCCH (Broadcast Control CHannel), a CCCH (Common Control CHannel), and a DCCH (Dedicated Control CHannel) are logical channels. The BCCH is a channel of the RRC layer used to deliver MIB or system information. The CCCH may be used to transmit a common RRC message in a plurality of terminal devices 1. The CCCH may be used for the terminal device 1 which is not connected by RRC. The DCCH may be used at least to transmit a dedicated RRC message to the terminal device 1. The DCCH may be used for the terminal device 1 that is in RRC-connected mode.

The RRC message includes one or more RRC parameters (information elements, higher layer parameters). For example, the RRC message may include a MIB. For example, the RRC message may include system information (SIB: System Information Block, MIB). SIB is a generic name for various type of SIBs (e.g., SIB1, SIB2). For example, the RRC message may include a message which corresponds to a CCCH. For example, the RRC message may include a message which corresponds to a DCCH. RRC message is a general term for common RRC message and dedicated RRC message.

The BCCH in the logical channel may be mapped to the BCH or the DL-SCH in the transport channel. The CCCH in the logical channel may be mapped to the DL-SCH or the UL-SCH in the transport channel. The DCCH in the logical channel may be mapped to the DL-SCH or the UL-SCH in the transport channel.

The UL-SCH in the transport channel may be mapped to a PUSCH in the physical channel. The DL-SCH in the transport channel may be mapped to a PDSCH in the physical channel. The BCH in the transport channel may be mapped to a PBCH in the physical channel.

A higher-layer parameter is a parameter included in an RRC message or a MAC CE (Medium Access Control Control Element). The higher-layer parameter is a generic name of information included in a MIB, system information, a message which corresponds to CCCH, a message which corresponds to DCCH, and a MAC CE. A higher-layer parameter may be referred to as an RRC parameter or an RRC configuration if the higher-layer parameter is the parameter included in the RRC message.

A higher-layer parameter may be a cell-specific parameter or a UE-specific parameter. A cell-specific parameter is a parameter including a common configuration in a cell. A UE-specific parameter is a parameter including a configuration that may be configured differently for each UE.

The base station device may indicate change of cell-specific parameters by reconfiguration with random-access. The UE may change cell-specific parameters before triggering random-access. The base station device may indicate change of UE-specific parameters by reconfiguration with or without random-access. The UE may change UE-specific parameters before or after random-access.

The procedure performed by the terminal device 1 includes at least a part or all of the following 5A to 5C. The 5A is cell search. The 5B is random-access. The 5C is data communication.

The cell search is a procedure used by the terminal device 1 to synchronize with a cell in the time domain and/or the frequency domain and to detect a physical cell identity. The terminal device 1 may detect the physical cell ID by performing synchronization of time domain and/or frequency domain with a cell by the cell search.

A sequence of a PSS is given based at least on a physical cell ID. A sequence of an SSS is given based at least on the physical cell ID.

An SS/PBCH block candidate indicates a resource for which transmission of the SS/PBCH block may exist. An SS/PBCH block may be transmitted at a resource indicated as the SS/PBCH block candidate. The base station device 3 may transmit an SS/PBCH block at an SS/PBCH block candidate. The terminal device 1 may receive (detect) the SS/PBCH block at the SS/PBCH block candidate.

A set of SS/PBCH block candidates in a half radio frame is also referred to as an SS-burst-set. The SS-burst-set is also referred to as a transmission window, a SS transmission window, or a DRS transmission window (Discovery Reference Signal transmission window). The SS-burst-set is a generic name that includes at least a first SS-burst-set and a second SS-burst-set.

The base station device 3 transmits SS/PBCH blocks of one or more indexes at a predetermined cycle. The terminal device 1 may detect an SS/PBCH block of at least one of the SS/PBCH blocks of the one or more indexes. The terminal device 1 may attempt to decode the PBCH included in the SS/PBCH block.

The random-access is a procedure including at least a part or all of message 1, message 2, message 3, and message 4.

The message 1 (Msg1, Msg 1) is a procedure in which the terminal device 1 transmits a PRACH. The terminal device 1 transmits the PRACH in one PRACH occasion (RACH occasion, RO) selected from among one or more PRACH occasions based on at least the index of the SS/PBCH block candidate detected based on the cell search.

The message 2 (Msg2, Msg 2) is a procedure in which the terminal device 1 attempts to detect a DCI format 1_0 with CRC (Cyclic Redundancy Check) scrambled by an RA-RNTI (Random Access-Radio Network Temporary Identifier). The terminal device 1 may attempt to detect the DCI format 1_0 in a search-space-set.

The message 3 (Msg3, Msg 3) is a procedure for transmitting a PUSCH scheduled by a random-access response grant included in the DCI format 1_0 detected in the message 2 procedure. The random-access response grant is indicated by the MAC CE included in the PDSCH scheduled by the DCI format 1_0.

The PUSCH scheduled based on the random-access response grant is either a message 3 PUSCH or a PUSCH. The message 3 PUSCH contains a contention resolution identifier MAC CE. The contention resolution ID MAC CE includes a contention resolution ID.

Retransmission of the message 3 PUSCH is scheduled by DCI format 0_0 with CRC scrambled by a TC-RNTI (Temporary Cell-Radio Network Temporary Identifier).

The message 4 (Msg4, Msg 4) is a procedure that attempts to detect a DCI format 1_0 with CRC scrambled by either a C-RNTI (Cell-Radio Network Temporary Identifier) or a TC-RNTI. The terminal device 1 receives a PDSCH scheduled based on the DCI format 1_0. The PDSCH may include a collision resolution ID.

Data communication is a generic term for downlink communication and uplink communication.

In data communication, the terminal device 1 attempts to detect a PDCCH (attempts to monitor a PDCCH, monitors a PDCCH). in a resource identified at least based on one or all of a control resource set and a search-space-set. It's also called as "the terminal device 1 attempts to detect a PDCCH in a control resource set", "the terminal device 1 attempts to detect a PDCCH in a search-space-set", "the terminal device 1 attempts to detect a PDCCH candidate in a control resource set", "the terminal device 1 attempts to detect a PDCCH candidate in a search-space-set", "the terminal device 1 attempts to detect a DCI format in a control resource set", or "the terminal device 1 attempts to detect a DCI format in a search-space-set". Monitoring a PDCCH may be equivalent as monitoring a DCI format in the PDCCH.

The control resource set is a set of resources configured by the number of resource blocks and a predetermined number of OFDM symbols in a slot.

The set of resources for the control resource set may be indicated by higher-layer parameters. The number of OFDM symbols included in the control resource set may be indicated by higher-layer parameters.

A PDCCH may be also called as a PDCCH candidate.

A search-space-set is defined as a set of PDCCH candidates. A search-space-set may be a Common Search Space (CSS) set or a UE-specific Search Space (USS) set.

The CSS set is a generic name of a type-0 PDCCH common search-space-set, a type-0a PDCCH common search-space-set, a type-1 PDCCH common search-space-set, a type-2 PDCCH common search-space-set, and a type-3 PDCCH common search-space-set. The USS set may be also called as UE-specific PDCCH search-space-set.

The type-0 PDCCH common search-space-set may be used as a common search-space-set with index 0. The type-0 PDCCH common search-space-set may be an common search-space-set with index 0.

A search-space-set is associated with (included in, corresponding to) a control resource set. The index of the control resource set associated with the search-space-set may be indicated by higher-layer parameters.

For a search-space-set, a part or all of 6A to 6C may be indicated at least by higher-layer parameters. The 6A is PDCCH monitoring period. The 6B is PDCCH monitoring pattern within a slot. The 6C is PDCCH monitoring offset.

A monitoring occasion of a search-space-set may correspond to one or more OFDM symbols in which the first OFDM symbol of the control resource set associated with the search-space-set is allocated. A monitoring occasion of a search-space-set may correspond to resources identified by the first OFDM symbol of the control resource set associated with the search-space-set. A monitoring occasion of a search-space-set is given based at least on a part or all of PDCCH monitoring periodicity, PDCCH monitoring pattern within a slot, and PDCCH monitoring offset.

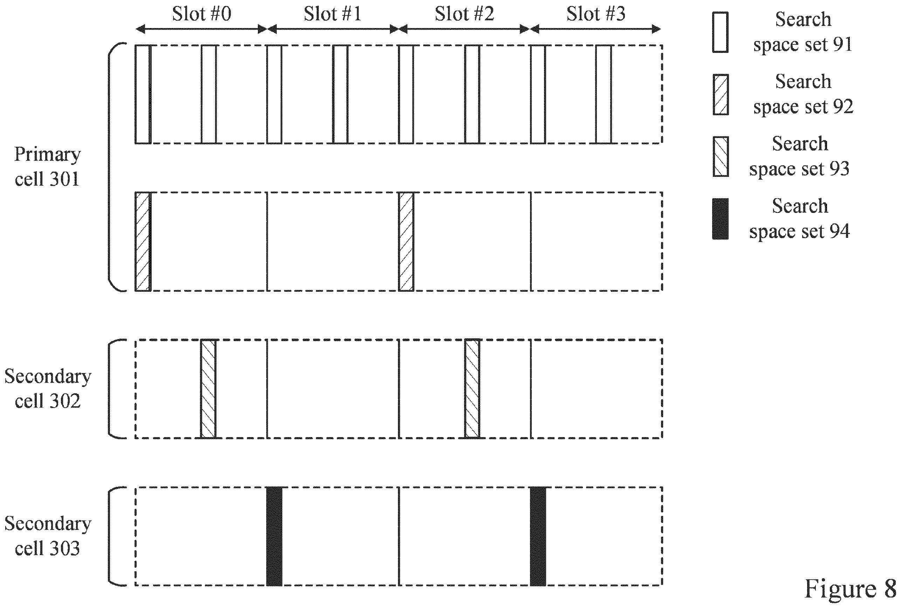

Figure 8 is a diagram showing an example of the monitoring occasion of the search-space-set. In Figure 8, the search-space-set 91 and the search-space-set 92 are sets in the primary cell 301, the search-space-set 93 is a set in the secondary cell 302, and the search-space-set 94 is a set in the secondary cell 303.

In Figure 8, the block indicated by the grid line indicates the search-space-set 91, the block indicated by the upper right diagonal line indicates the search-space-set 92, the block indicated by the upper left diagonal line indicates the search-space-set 93, and the block indicated by the horizontal line indicates the search-space-set 94.

In Figure 8, the PDCCH monitoring periodicity for the search-space-set 91 is set to 1 slot, the PDCCH monitoring offset for the search-space-set 91 is set to 0 slot, and the PDCCH monitoring pattern for the search-space-set 91 is [1, 0, 0, 0, 0, 0, 0, 1, 0, 0, 0, 0, 0, 0]. That is, the monitoring occasion of the search-space-set 91 corresponds to the first OFDM symbol (OFDM symbol # 0) and the eighth OFDM symbol (OFDM symbol # 7) in each of the slots.

In Figure 8, the PDCCH monitoring periodicity for the search-space-set 92 is set to 2 slots, the PDCCH monitoring offset for the search-space-set 92 is set to 0 slots, and the PDCCH monitoring pattern for the search-space-set 92 is [1, 0, 0, 0, 0, 0, 0, 0, 0, 0, 0, 0, 0, 0]. That is, the monitoring occasion of the search-space-set 92 corresponds to the leading OFDM symbol (OFDM symbol # 0) in each of the even slots.

In Figure 8, the PDCCH monitoring periodicity for the search-space-set 93 is set to 2 slots, the PDCCH monitoring offset for the search-space-set 93 is set to 0 slots, and the PDCCH monitoring pattern for the search-space-set 93 is [0, 0, 0, 0, 0, 0, 0, 1, 0, 0, 0, 0, 0, 0]. That is, the monitoring occasion of the search-space-set 93 corresponds to the eighth OFDM symbol (OFDM symbol # 8) in each of the even slots.

In Figure 8, the PDCCH monitoring periodicity for the search-space-set 94 is set to 2 slots, the PDCCH monitoring offset for the search-space-set 94 is set to 1 slot, and the PDCCH monitoring pattern for the search-space-set 94 is [1, 0, 0, 0, 0, 0, 0, 0, 0, 0, 0, 0, 0, 0]. That is, the monitoring occasion of the search-space-set 94 corresponds to the leading OFDM symbol (OFDM symbol # 0) in each of the odd slots.

The type-0 PDCCH common search-space-set may be at least used for a DCI format with a cyclic redundancy check (CRC) sequence scrambled by an SI-RNTI (System Information-Radio Network Temporary Identifier).

The type-0a PDCCH common search-space-set may be used at least for a DCI format with a cyclic redundancy check sequence scrambled by an SI-RNTI.

The type-1 PDCCH common search-space-set may be used at least for a DCI format with a CRC sequence scrambled by an RA-RNTI (Random Access-Radio Network Temporary Identifier) or a CRC sequence scrambled by a TC-RNTI (Temporary Cell-Radio Network Temporary Identifier).

The type-2 PDCCH common search-space-set may be used for a DCI format with a CRC sequence scrambled by P-RNTI (Paging-Radio Network Temporary Identifier).

The type-3 PDCCH common search-space-set may be used for a DCI format with a CRC sequence scrambled by a C-RNTI (Cell-Radio Network Temporary Identifier).

The UE-specific search-space-set may be used at least for a DCI format with a CRC sequence scrambled by a C-RNTI.

In downlink communication, the terminal device 1 may detect a downlink DCI format. The detected downlink DCI format is at least used for resource assignment for a PDSCH. The detected downlink DCI format is also referred to as downlink assignment. The terminal device 1 attempts to receive the PDSCH. Based on a PUCCH resource indicated based on the detected downlink DCI format, an HARQ-ACK corresponding to the PDSCH (HARQ-ACK corresponding to a transport block included in the PDSCH) may be reported to the base station device 3.

In uplink communication, the terminal device 1 may detect an uplink DCI format. The detected uplink DCI format is at least used for resource assignment for a PUSCH. The detected uplink DCI format is also referred to as uplink grant. The terminal device 1 transmits the PUSCH.

PUSCH transmission(s) can be dynamically scheduled by an UL grant in a DCI, or the transmission can correspond to a configured grant Type 1 or Type 2. The configured grant Type 1 PUSCH transmission is semi-statically configured to operate upon the reception of higher layer parameter of *configuredGrantConfig* including *rrc-ConfiguredUplinkGrant* without the detection of an UL grant in a DCI. The configured grant Type 2 PUSCH transmission is semi-persistently scheduled by an UL grant in a valid activation DCI according to those procedure(s) after the reception of higher layer parameter *configuredGrantConfig* not including *rrc-ConfiguredUplinkGrant. If configuredGrantConfigToAddModList* is configured, more than one configured grant configuration of configured grant Type 1 and/or configured grant Type 2 may be active at the same time on an active BWP of a serving cell.

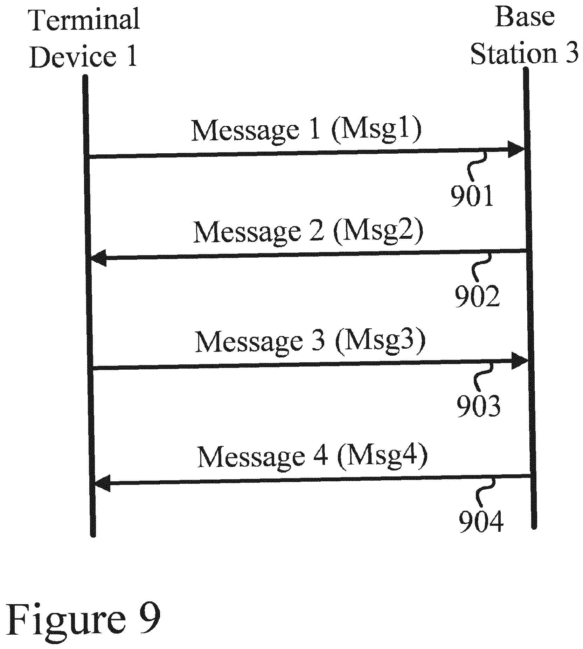

Figure 9 is a diagram illustrating an example of a contention-based random access (CBRA) procedure of the terminal device 1 according to the present embodiment.

In 901, the terminal device 1 transmits a random access preamble to the base station device (BS) 3 via a PRACH. The transmitted random access preamble may be referred to as a message 1 (Msg1, Msg 1). The transmission of the random access preamble will also be referred to as PRACH transmission. The random access preamble is configured to notify information to the BS 3 using one sequence among a plurality of sequences. For example, 64 types (the numbers of random access preamble indexes range from 1 to 64) of sequences are prepared. In a case that 64 types of sequences are prepared, it is possible to indicate 6-bit information (which may be *ra-PreambleIndex* or a preamble index) for the BS 3. The information may be indicated as a random access preamble identifier (Random Access Preamble Identifier, RAPID).

In a case of a CBRA procedure, an index of a random access preamble is randomly selected by the terminal device 1 itself. In the CBRA procedure, the terminal device 1 selects SS/PBCH blocks that have SS/PBCH block RSRP exceeding a configured threshold value and performs selection of a preamble group. In a case that a relationship between the SS/PBCH block and the random access preamble has been configured, the terminal device 1 randomly selects *ra-PreambleIndex* from one or a plurality of random access preambles associated with the selected SS/PBCH block and the selected preamble group and sets selected *ra-PreambleIndex* to the preamble index (PREAMBLE_INDEX). Also, the selected SS/PBCH block and the selected preamble group may be split into two subgroups based on the transmission size of the Msg3, for example. The terminal device 1 may randomly select a preamble index from the subgroup corresponding to a small transmission size of the Msg3 903 in a case that the transmission size of the Msg3 903 is small, or may randomly select a preamble index from the subgroup corresponding to a large transmission size of the Msg3 903 in a case that the transmission size of the Msg3 903 is large. The index in the case in which the message size is small is typically selected in a case that properties of the transmission path are poor (or the distance between the terminal device 1 and the BS 3 is far), and the index in the case in which the message size is large is selected in a case that the properties of the transmission path are good (or the distance between the terminal device 1 and the BS 3 is close).

Next, the BS 3 that has received the Msg1 901 generates a RAR message including an uplink grant (Random Access Response Grant, RAR UL grant) for indicating transmission for the terminal device 1 and transmits a random access response including the generated RAR message to the terminal device 1 in DL-SCH in 902. In other words, the BS 3 transmits, in the PDSCH in a primary cell, the random access response including the RAR message corresponding to the random access preamble transmitted in 901. The PDSCH corresponds to a PDCCH including RA-RNTI. This RA-RNTI is calculated by RA-RNTI = 1 + s_id + 14 x t_id + 14 × 80 × f id + 14 × 80 × 8 × ul_carrier_id. Here, s_id is an index of the first OFDM symbol in the transmitted PRACH and is a value of 0 to 13. t_id is an index of the first slot of the PRACH in the system frame and is a value of 0 to 79. f_id is an index of the PRACH in the frequency domain and is a value of 0 to 7. ul_carrier_id is an uplink carrier used for Msg1 transmission. ul_carrier_id for the NUL carrier is 0 while ul_carrier_id for the SUL carrier is 1.

The random access response may be referred to as a message 2 (Msg2, Msg 2) 902. Also, the BS 3 includes, in the Msg2, a random access preamble identifier corresponding to the received random access preamble and an RAR message (MAC RAR) corresponding to the identifier. The BS 3 calculates a deviation in transmission timing between the terminal device 1 and the BS 3 from the received random access preamble and includes, in the RAR message, transmission timing adjustment information (Timing Advance (TA) command) for adjusting the deviation. The RAR message includes at least a random access response grant field mapped to the uplink grant, a Temporary Cell Radio Network Temporary Identifier (C-RNTI) field to which Temporary C-RNTI is mapped, and a Timing Advance (TA) command. The terminal device 1 adjusts the timing of the PUSCH transmission based on the TA command. The timing of the PUSCH transmission may be adjusted for each cell group. The BS 3 includes, in the Msg2 902, the random access preamble identifier corresponding to the received random access preamble.

In order to respond to PRACH transmission, the terminal device 1 detects (monitors) the DCI format 1_0 to which a CRC parity bit scrambled with the corresponding RA-RNTI is added, during a time period of a random access response window. The time period of the random access response window (window size) is provided by a higher layer parameter *ra-Response Window.* The window size is the number of slots based on the subcarrier spacing of the Type1-PDCCH common search space.

In a case that the terminal device 1 detects the DCI format 1_0 to which the CRC scrambled with RA-RNTI is added and the PDSCH including one DL-SCH transport block in the time period of the window, then the terminal device 1 passes the transport block to the higher layer. The higher layer analyzes the transport block for the random access preamble identifier (RAPID) related to the PRACH transmission. In a case that the higher layer identifies RAPID included in the RAR message of the DL-SCH transport block, the higher layer indicates the uplink grant for the physical layer. The identification means that RAPID included in the received random access response and RAPID corresponding to the transmitted random access preamble are the same. The uplink grant will be referred to as a random access response uplink grant (RAR UL grant) in the physical layer. In other words, the terminal device 1 can specify the RAR message (MAC RAR) dedicated to itself from the BS 3, by monitoring the random access response (contained in Msg2 902) corresponding to the random access preamble identifier.

In a case that the terminal device 1 does not detect the DCI format 1_0 to which CRC scrambled with RA-RNTI is added in the time period of the window, or (ii) in a case that the terminal device 1 does not properly receive the DL-SCH transport block in the PDSCH in the time period of the window, or (iii) in a case that the higher layer does not identify RAPID related to the PRACH transmission, the higher layer provides an indication to transmit the PRACH to the physical layer.

In a case that the random access preamble identifier corresponding to the transmitted random access preamble is included in the received random access response, and the random access preamble has been selected based on the information received by the terminal device 1 from the BS 3, the terminal device 1 regards the non-contention-based random access procedure as having successfully been completed and transmits the PUSCH based on the uplink grant included in the random access response.

In a case that the random access preamble identifier corresponding to the transmitted random access preamble is included in the received random access response, and the random access preamble has been selected by the terminal device 1 itself, TC-RNTI is set to the value of the TC-RNTI field included in the received random access response, and the random access Msg3 903 is transmitted in the PUSCH based on the uplink grant included in the random access response. The PUSCH corresponding to the uplink grant included in the random access response is transmitted in a serving cell in which the corresponding preamble has been transmitted in the PRACH.

The random access process described in Figure 9 is regarded as a 4-step random access type, which requires two round round-trip transmissions between the terminal device 1 and the BS 3. To further reduce the latency of the random access process, a 2-step random access may be considered.

For the 2-step random access type, the preamble (Msg1) and the scheduled PUSCH transmission (Msg3) defined in the 4-step type are combined into a single message MsgA. The RAR (Msg2) and the contention resolution message (Msg4) are combined into a single message MsgB.

The MsgA PRACH preambles are separate from the 4-step random access preambles, but can be transmitted in the same PRACH Occasions (ROs) as the preambles of 4-step random access type, or in separate ROs. The PUSCH transmissions are organized into PUSCH Occasions (POs) which span multiple symbols and PRBs with optional guard periods and guard bands between consecutive POs. Each PO consists of multiple DMRS ports and DMRS sequences, with each DMRS port/DMRS sequence pair known as PUSCH resource unit (PRU). The 2-step random access type supports at least one-to-one and multiple-to-one mapping between the preambles and PRUs.

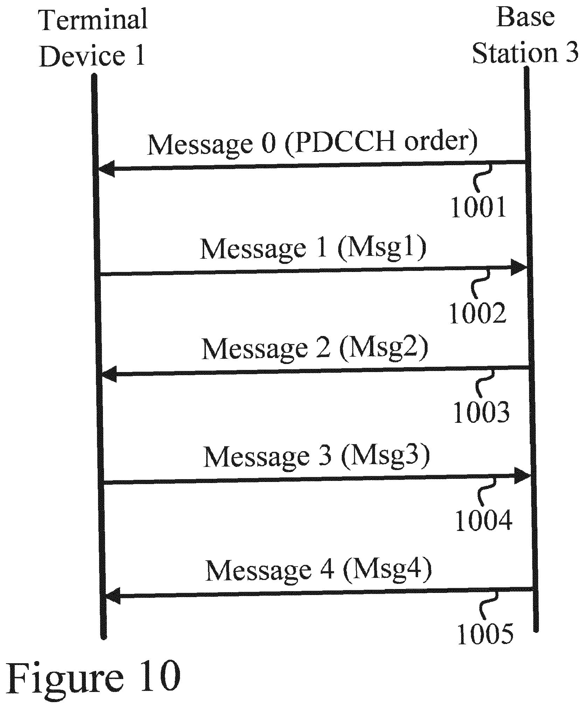

Figure 10 is a diagram illustrating an example of a contention-free random access (CFRA) procedure of the terminal device 1 according to the present embodiment.

In 1001, the BS 3 transmits a PDCCH order to the terminal device 1 on a PDCCH, and indicates the terminal device 1 to perform a random access procedure. Information indicated by the PDCCH order may include preamble index information, PRACH mask index information, SS/PBCH index information.

The preamble index information is information indicating one or more preamble indexes out of preamble indexes of available random access preamble indexes indicated by the random access configuration information. Note that, in a case where the preamble index information is a prescribed value, the terminal apparatus 1 may select one random access preamble from one or more available random access preambles at random.

The PRACH mask index information is information indicating an index of one or more RACH occasions associated with the SS/PBCH indicated by "SS/PBCH index" information for the PRACH transmission. Note that a time resource and/or a frequency resource indicated by the PRACH mask index information may be one specific resource or may indicate selectable multiple resources.

The SS/PBCH index information is information the SS/PBCH that shall be used to determine the RACH occasion(s) for the PRACH transmission.

In 1002, the terminal device 1 that has received the PDCCH order transmits a random access preamble to the BS 3 via a PRACH. The transmitted random access preamble may be referred to as Msg1. The transmission of the random access preamble will also be referred to as PRACH transmission. Note that the terminal device 1 transmits a random access preamble that is indicated in a case where the PDCCH order indicates a preamble index indicating one random access preamble. Note that, in a case where a preamble index indicating a prescribed value is indicated by the PDCCH order, the terminal device 1 may select one random access preamble from available random access preambles at random. Note that, in a case where a PRACH mask index is indicated by the PDCCH order, the terminal device 1 transmits a random access preamble by using a frequency resource and/or a time resource corresponding to the indicated PRACH mask index.

In 1003, the BS 3 that has received a random access preamble generates a random access response including an uplink grant for indicating the terminal device 1 to perform transmission, and transmits the generated random access response to the terminal device 1 on a PDSCH. The random access response may be referred to as message 2 or Msg 2.

In 1004, the terminal device 1 that has transmitted a random access preamble monitors a PDCCH for the random access response identified by an RA-RNTI, within multiple subframe periods (referred to as RA response windows) after the transmission of the random access preamble. In a case where the terminal device 1 that has transmitted a random access preamble detects a relevant RA-RNTI, the terminal device 1 decodes the random access response mapped to the PDSCH. The terminal device 1 that has successfully decoded the random access response confirms whether or not a random access preamble identifier corresponding to the transmitted random access preamble is included in the random access response. In a case where the random access preamble identifier is included, synchronization difference is corrected by using transmission timing adjustment information indicated by the random access response. The terminal device 1 transmits data stored in a buffer to the BS 3 by using an uplink grant included in the received random access response. In this case, the data transmitted by using an uplink grant is referred to as message 3 or Msg 3. In a case where the successfully decoded random access response is the first random access response successfully received in a series of random access procedures, the terminal device 1 includes information (C-RNTI) for identifying the terminal device 1 in message 3 to be transmitted, and transmits message 3 to the BS 3.

In 1005, in a case where the BS 3 receives uplink transmission on a resource allocated for message 3 of the terminal device 1 in the random access response, the BS 3 detects a C-RNTI MAC CE included in received message 3. In a case where the BS 3 establishes connection with the terminal apparatus 1, the BS 3 transmits a PDCCH to the detected C-RNTI. In a case where the BS 3 transmits a PDCCH to the detected C-RNTI, the BS 3 includes an uplink grant in the PDCCH. Such PDCCH transmitted by the BS 3 are referred to as message 4, Msg 4, or a contention resolution message. The terminal device 1 that has transmitted message 3 starts a contention resolution timer that defines a period for monitoring message 4 from the BS 3, and attempts to receive a PDCCH transmitted from the BS 3 within the timer. In a case where the terminal device 1 that has transmitted a C-RNTI MAC CE in message 3 receives a PDCCH addressed to the transmitted C-RNTI from the BS 3, and an uplink grant for new transmission is included in the PDCCH, the terminal device 1 considers that contention resolution with another terminal device 1 has succeeded, stops the contention resolution timer, and ends the random access procedure. In a case where the terminal device 1 cannot confirm, within the timer period, that the terminal device 1 received a PDCCH addressed to the C-RNTI that the terminal device 1 itself transmitted in message 3, the terminal device 1 considers that contention resolution did not succeed, transmits a random access preamble again, and continues the random access procedure.

In CFRA procedure, through transmission and/or reception of the above five messages, the terminal device 1 can establish synchronization with the BS 3, and can perform uplink data transmission to the BS 3.

In a case where the terminal device 1 receives a PDCCH from the BS 3 and the PDCCH includes information indicating initiation of a random access procedure, the terminal device 1 may perform the contention-free random access (CFRA) procedure. Note that the information indicating initiation of a random access procedure may be referred to as a PDCCH order, message 0, Msg.0, or the like. The CFRA procedure is a procedure in which a random access is performed by using a preamble corresponding to a random access preamble index indicated by a PDCCH order from the base station 3. The CFRA procedure is used to promptly establish uplink synchronization between the terminal device 1 and the BS 3 in a case where a handover and a transmission timing of a terminal device 1 are not valid although the BS 3 and the terminal device 1 are connected, for example. Note that the purpose of the random access is not limited to the above purposes.

In a case of the CFRA procedure, an index of the random access preamble is selected based on information received by the terminal device 1 from the BS 3. Here, the information received by the terminal device 1 from the BS 3 may be included in the PDCCH. The information can be called as PDCCH order. In a case that all the values of bits of the index of the random access preamble received from the BS 3 are 0, the contention-based random access procedure is executed by the terminal device 1, and the index of the random access preamble is selected by the terminal device 1 itself.

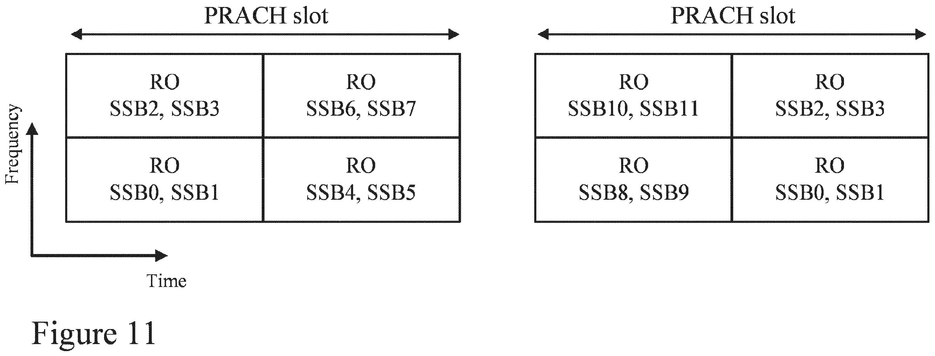

Figure 11 is a diagram illustrating an example of allocation of SSB indexes to PRACH occasions according to the embodiment of the present invention. Figure 11 illustrates an example of a case in which two PRACH slots are present in a certain time period, two PRACH occasions (RO) in the time direction and two PRACH occasions (RO) in the frequency direction are present in one PRACH slot, and SSB indexes 0 to 11 are present. Two SSB indexes are mapped to one PRACH occasion, the SSB indexes are mapped in accordance with the aforementioned rules (1) to (4), and the SSB indexes are mapped from the SSB index 0 again from the seventh PRACH occasion.

In a case that although the SSB indexes are mapped to each PRACH occasion, all the SSB indexes (all SS/PBCH blocks transmitted by the BS 3) are not mapped even in a case that all the PRACH occasions in a PRACH configuration period specified by *prach-ConfigIndex* are used, the SSB indexes may be mapped over a plurality of PRACH configuration periods. However, the entire number of SS/PBCH blocks transmitted by the BS 3 may be indicated by a higher layer parameter. The period at which the PRACH configuration period is repeated a predetermined number of times such that all the SSB indexes are mapped at least once will be referred to as an association period. As the number of times the PRACH configuration period configuring the association period is repeated, a minimum value that satisfies the conditions, as mentioned before, in a predefined set of a plurality of values may be used. The predefined set of a plurality of values may be defined for each PRACH configuration period. However, in a case that all the SSB indexes are mapped to the PRACH occasions in the association period, and the number of remaining PRACH occasions is greater than the number of SS/PBCH blocks, the SSB indexes may be mapped again. However, in a case that all the SSB indexes are mapped to the PRACH occasions in the association period, and the number of remaining PRACH occasions is smaller than the number of SS/PBCH blocks, the SSB indexes may not be mapped to the remaining PRACH occasions. A cycle at which the PRACH occasions are allocated to all the SSB indexes once will be referred to as an SSB index allocation cycle. In a case that *SSB-perRACH-Occasion* is equal to or greater than 1, each of the SSB indexes is mapped to one PRACH occasion in one SSB index allocation cycle. In a case that *SSB-perRACH-Occasion* is a value that is smaller than 1, each SSB index is mapped to 1/*SSB-perRACH-Occasion* PRACH occasions in one SSB index allocation cycle. The terminal device 1 may specify the association period based on the PRACH configuration period indicated by the PRACH configuration index and the number of SS/PBCH blocks specified by the higher parameter provided by the higher layer (higher layer signal).

Each of one or a plurality of random access preamble groups included in random access configuration information may be associated for each reference signal (for example, an SS/PBCH block, a CSI-RS, or a downlink transmission beam). The terminal device 1 may select a random access preamble group based on the received reference signal (for example, the SS/PBCH block, the CSI-RS, or the downlink transmission beam).

However, the random access preamble group associated with each SS/PBCH block may be specified by one or a plurality of parameters notified from the higher layer. The one parameter or one of the plurality of parameters may be one index (for example, a start index) of one or a plurality of available preambles. The one parameter or the one of the plurality of parameters may be the number of preambles that can be used for a contention-based random access per SS/PBCH block. The one parameter or the one of the plurality of parameters may be a total of the number of preambles that can be used for the contention-based random access per SS/PBCH block and the number of preambles that can be used for the non-contention-based random access. The one parameter or the one of the plurality of parameters may be the number of SS/PBCH blocks associated with one PRACH occasion.

However, the terminal device 1 may receive one or a plurality of downlink signals, each of which is transmitted using one downlink transmission beam, receive random access configuration information associated with one of the downlink signals, and perform the random access procedure based on the received random access configuration information. The terminal device 1 may receive one or a plurality of SS/PBCH blocks in the SS burst set, receive random access configuration information associated with one of the SS/PBCH blocks, and perform the random access procedure based on the received random access configuration information. The terminal device 1 may receive one or a plurality of CRI-RSs, receive random access configuration information associated with one of the CRI-RSs, and perform the random access procedure based on the received random access configuration information. The random access configuration information may be included in system information transmitted by the BS 3 to the terminal device 1.

One or a plurality of pieces of random access configuration information may include one random access channel configuration (*RACH-Config*) and/or one physical random access channel configuration (*PRACH-Config*).

Parameters related to the random access for each reference signal may be included in the random access channel configuration.

Parameters (such as an index of PRACH configuration, a PRACH occasion, and the like) related to the physical random access channel for each reference signal may be included in the physical random access channel configuration.

One piece of random access configuration information may indicate parameters related to a random access corresponding to one reference signal, and a plurality of pieces of random access configuration information may indicate parameters related to a plurality of random accesses corresponding to a plurality of reference signals.

One piece of random access configuration information may indicate parameters related to a physical random access corresponding to one reference signal, and may indicate parameters related to a plurality of random accesses corresponding to a plurality of reference signals.

Random access configuration information corresponding to a reference signal (random access channel configuration corresponding to the reference signal, physical random access channel configuration corresponding to the reference signal) may be selected in response to selection of the corresponding reference signal.

However, the terminal device 1 may receive one or a plurality of pieces of random access configuration information from a BS 3 that transmits the random access preamble and/or a BS 3 that is different from the transmission reception points 4 and/or the transmission reception points 4. For example, the terminal device 1 may transmit the random access preamble to a second BS 3 based on at least one piece of random access configuration information received from a first BS 3.

However, the BS 3 may determine the downlink transmission beam to be applied in a case that the downlink signal is transmitted to the terminal device 1, by receiving the random access preamble transmitted by the terminal device 1. The terminal device 1 may transmit the random access preamble using a PRACH occasion indicated by the random access configuration information associated with a certain downlink transmission beam. The BS 3 may determine the downlink transmission beam to be applied in a case that the downlink signal is transmitted to the terminal device 1, based on the random access preamble received from the terminal device 1 and/or the PRACH occasion in which the random access preamble is received.

The BS 3 transmits an RRC parameter including one or a plurality of pieces of random access configuration information (which may include random access resources) as an RRC message to the terminal device 1.

The terminal device 1 may select one or a plurality of available random access preambles and/or one or a plurality of available PRACH occasions used for the random access procedure based on properties of a transmission path with the BS 3.

The terminal device 1 may select one or a plurality of available random access preambles and/or one or a plurality of PRACH occasions used for the random access procedure based on properties of the transmission path (which may be a RSRP, for example) measured by a reference signal (an SS/PBCH bock and/or a CSI-RS, for example) received from the BS 3.

For the enhancement of uplink coverage, PRACH is one of the bottleneck channels. Multiple PRACH transmissions (can be called as a PRACH repetition or a repetition of a PRACH transmission) before a RAR window could provide clear joint decoding gain if the same uplink transmission beam for the repetitions is used. One or multiple PRACH transmissions before a RAR window can be called as PRACH transmission(s) within a RACH attempt. In other words, the PRACH retransmission after the RAR window is performed as next RACH attempt.

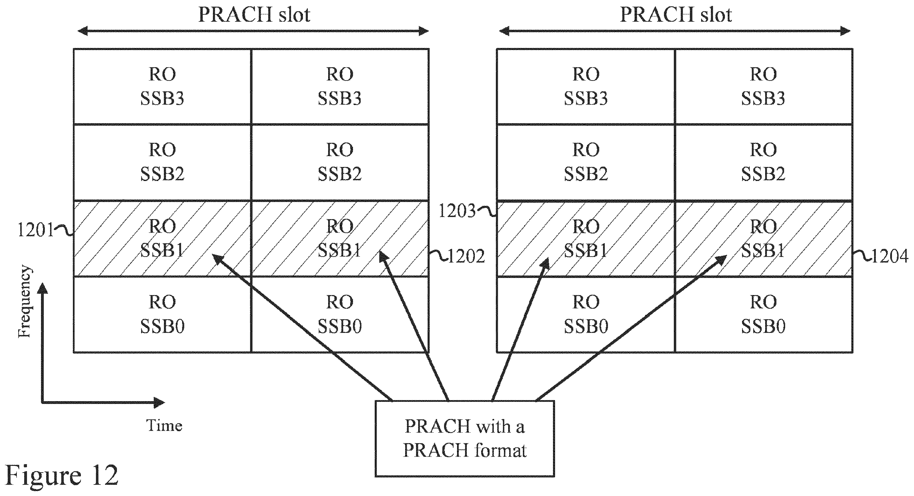

Figure 12 is a diagram showing an example of PRACH repetition using a plurality of PRACH occasions. In figure 12, 4 FDMed PRACH occasions (ROs) are allocated with 4 time resources with 2 PRACH slots and there are totally 16 ROs. Each RO is associated with one of the SSB0 - SSB3. When the terminal device 1 transmits PRACH associated to SSB1 with 4 repetitions, PRACH with a PRACH format using a preamble is allocated to RO 1201, RO 1202, RO 1203 and RO 1204 to transmit 4 times.

The plurality of PRACH occasions and/or PRACH preambles which are available for PRACH repetition can be specified by the higher-layer parameters included in RACH configuration information. Different higher-layer parameters can be provided for different number of repetitions.

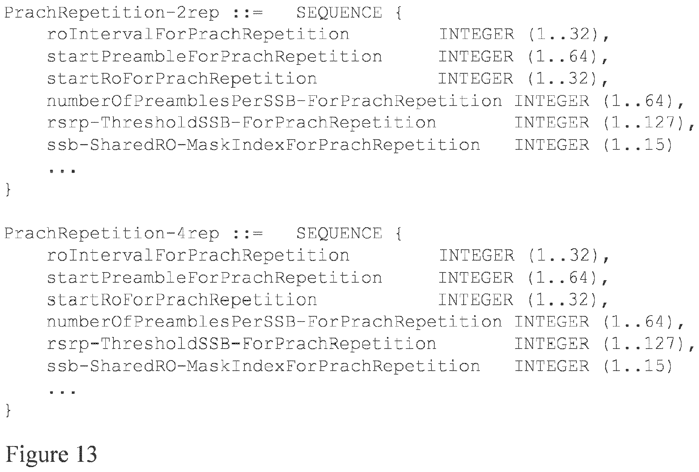

Figure 13 is an example of the higher-layer parameters to identify a set of PRACH preambles and PRACH occasions available for a PRACH repetition. *PrachRepetition-2rep* is the higher-layer parameter for a PRACH transmission (repetition) with 2 repetitions. *PrachRepetition-2rep* may include *roIntervalForPrachRepetition, startPreambleForPrachRepetition, numberOfPreamblesPerSSB-ForPrachRepetition, rsrp-ThresholdSSB-ForPrachRepetition* and *ssb-SharedRO-MaskIndexForPrachRepetition.* Other parameters can be included in the *PrachRepetition-2rep,* if needed.

*roIntervalForPrachRepetition* is a parameter which defines the interval of RO used for the PRACH repetition. When a plurality of ROs are associated to a SSB, *roIntervalForPrachRepetition* indicates the interval of RO used for the PRACH repetition within the plurality of ROs. When *roIntervalForPrachRepetition* is 1, all ROs associated for a SSB can be used for the PRACH repetition.

*startPreambleForPrachRepetition* is a parameter which defines the first preamble associated with the PRACH repetition. If N<1 the first preamble in each PRACH occasion is the one having the same index indicated by this field. If N>=1 in each PRACH occasion N blocks of preambles associated with the PRACH repetition are define, each having start index n * N^total_preamble / N + *startPreambleForPrachRepetition,* where N refers to the number of SSB block indexes associated with one PRACH occasion referring to *ssb-perRACH-OccasionAndCB-PreamblesPerSSB,* n refers to SSB block index and N^total_preamble is provided by *totalNumberOfRA-Preambles.*

*startRoForPrachRepetition* is a parameter which defines the first RO associated with the PRACH repetition among the ROs associated to a SSB.

*numberOfPreamblesPerSSB-ForPrachRepetition* is a parameter which determines how many consecutive preambles are associated to the PRACH repetition starting from the starting preamble(s) per SSB

*rsrp-ThresholdSSBForPrachRepetition* is a parameter which indicates L1-RSRP threshold used for determining whether a candidate beam (SSB, DL transmission beam) may be used by the UE. The *rsrp-ThresholdSSBForPrachRepetition* is also used for determining the number of repetition for the PRACH transmission. When there is no candidate beam (SSB) with the L1-RSRP beyond L1-RSRP threshold for single PRACH transmission without repetition and there is one or more candidate beams (SSBs) with the L1-RSRP beyond the L1-RSRP threshold with *rsrp-ThresholdSSBForPrachRepetition* in *PrachRepetition-2rep,* the terminal device 1 determines to perform a PRACH transmission with 2 times repetition.

*ssb-SharedRO-MasklndexForPrachRepetition* is a parameter which indicates a subset of ROs where preambles are allocated for the PRACH repetition. If this parameter is configured within *PrachRepetitionPreambles* which is included in *RACH-ConfigCommonTwoStepRA,* it indicates a subset of ROs configured within this *RACH-ConfigCommonTwoStepRA.* This parameter is configured when there is more than one RO per SSB. If the field is absent, all ROs configured in *RACH-ConfigCommon* or *RACH-ConfigCommonTwoStepRA* containing *PrachRepetition-2rep* are shared.

Based on the parameters included in *PrachRepetition-2rep,* the terminal device 1 determines/identifies ROs and/or preamble partition (i.e. a set of preambles) used for PRACH transmission with 2 times repetition.

As same as *PrachRepetition-2rep* for PRACH transmission with 2 times repetition, the different higher-layer parameters for the PRACH transmissions with different number of repetitions (e.g. 4 times, 8 times, etc.) can be configured in a PRACH configuration (They can be included in common configuration for UL BWP (*BWP-UplinkCommon*) as additional RACH configuration information). In figure 13, The parameter *PrachRepetition-4rep* includes the parameters for the PRACH transmission with 4 times repetition and the possible parameters in *PrachRepetition-4rep* can be same as the parameters in *PrachRepetition-2rep* (but each values in the parameters can be independently set). Similarly, higher-layer parameter *PrachRepetition-Xrep* (e.g. X can be 1, 2, 4, 8) can be used for the configuration of PRACH transmission with "X" (e.g. X = 1, 2, 4, 8) times repetition.

By using these higher-layer parameters like above, the corresponding "X" times PRACH transmission is valid (or provided) when the *PrachRepetition-Xrep* is included in the PRACH configuration, and is invalid (or not provided) otherwise. This structure can indicates the corresponding number of repetitions implicitly for the parameters for the PRACH repetition.

When multiple *PrachRepetition-Xrep* are configured, *rsrp-ThresholdSSBForPrachRepetition* in the *PrachRepetition-Xrep* is used to identify the number of repetitions for a PRACH repetition. When *PrachRepetition-Xrep* and *PrachRepetition-Yrep* are both configured and X < Y, the RSRP threshold indicated by *rsrp-ThresholdSSB-ForPrachRepetition* in *PrachRepetition-Xrep* is used to determine which of X times repetition and Y times repetition is used for the repetition of PRACH transmission. In addition, if the measured L1-RSRP of SSB is beyond the L1-RSRP threshold indicated by *rsrp-ThresholdSSB* in *RACH-ConfigCommon* for single PRACH transmission, the terminal device 1 may perform a single PRACH transmission without the repetition.

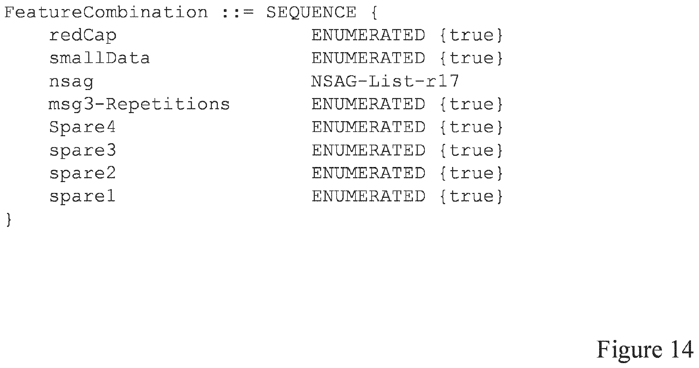

*PrachRepetition Xrep* may include a parameter *FeatureCombination.* Figure 14 is an example of *FeatureCombination. FeatureCombination* is a parameter which indicates which combination of features that the preambles indicated by this parameter are associated with. The terminal device 1 ignores a RACH resource defined by this *PrachRepetition-Xrep* if any feature within the *featureCombination* is not supported by the UE or has an unknown value.

If *msg3-Repetitions* is present in *featureCombination,* the parameter indicates that signalling of msg3 repetition is part of this feature combination.

When the *PrachRepetition-Xrep* is associated with both Msg3 repetition and PRACH repetition, the parameter which specifies a subset of preambles used for the PRACH repetition within the preamble partition. For example, the parameter which indicates boundary of PRACH preamble indices which specifies whether the preambles are available both for PRACH repetition and for Msg3 repetition case or only for Msg3 repetition case, is provided in *PrachRepetition-Xrep.*

In case of CFRA procedure, to perform a repetition of PRACH transmission (i.e. multiple PRACH transmissions within a RACH attempt), the DCI with a DCI format for random access procedure initiated by PDCCH order may include an information of multiple RACH occasions and/or an information of the repetition number for the PRACH transmission.

The DCI format for PDCCH order may include, in addition to a field indicating random access preamble index and a field indicating SS/PBCH index, an RO indication field indicating the multiple RACH occasions associated with a SS/PBCH indicated by the SS/PBCH index to perform a repetition of the PRACH transmission.

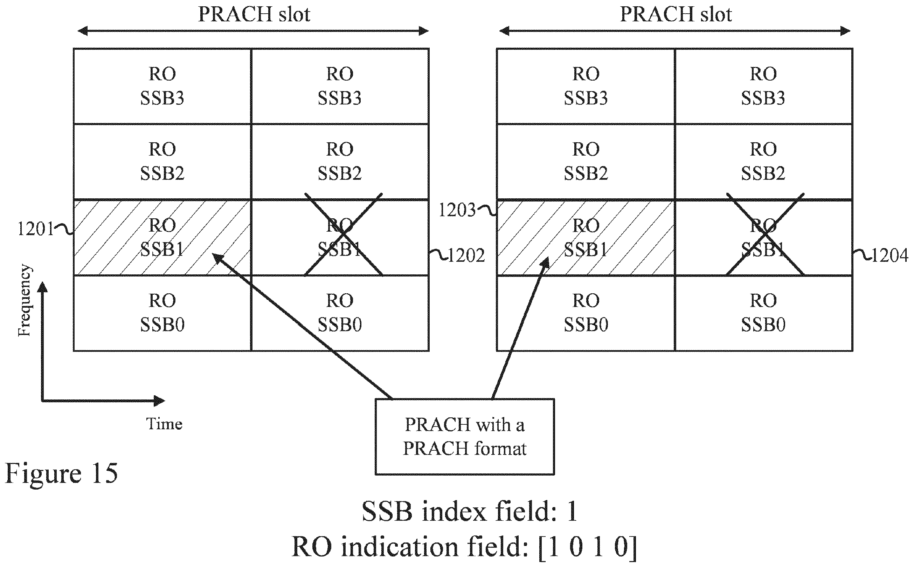

The RO indication field may be indicated as bitmap information wherein each bit in the bitmap corresponds to a RACH occasion (RO) associated with the SS/PBCH indicated by the SS/PBCH index. Figure 15 shows an example of ROs for multiple PRACH transmission indicated by the RO indication field as PDCCH order. In figure 15, SSB index indicated by PDCCH order is 1 and there are 4 possible ROs associated with the SSB 1 (1201, 1202, 1203 and 1204). 4 bits of RO indication field corresponds the 4 possible ROs. When the RO indication field is [1 0 1 0], the RO 1201 and RO 1203 are valid and the terminal device 1 performs 2 repetitions of PRACH transmission using these ROs. Herein, the number of bits with "1" may implicitly indicate the number of repetitions of PRACH transmission. Otherwise, The DCI format for PDCCH order may includes a field indicating the number of repetitions explicitly.

The RO indication field may be indicated as mask index wherein each index in the mask index corresponds to N ROs (N is the number of repetition for PRACH transmission) within multiple ROs associated with the SS/PBCH indicated by the SS/PBCH index. a set of N ROs within ROs associated with an SS/PBCH are indexed as RO group (0, 1, 2, ...) and RO group index in RO indication field may indicate one or more of the RO groups as available ROs for the repetition of the PRACH transmission.

Regarding RO group associated with RO group index can be configured by higher-layer parameter or consecutively indexed in ascending order in frequency and/or time domain.

With this RO indication field, BS3 can schedule ROs for multiple PRACH transmission flexibly.

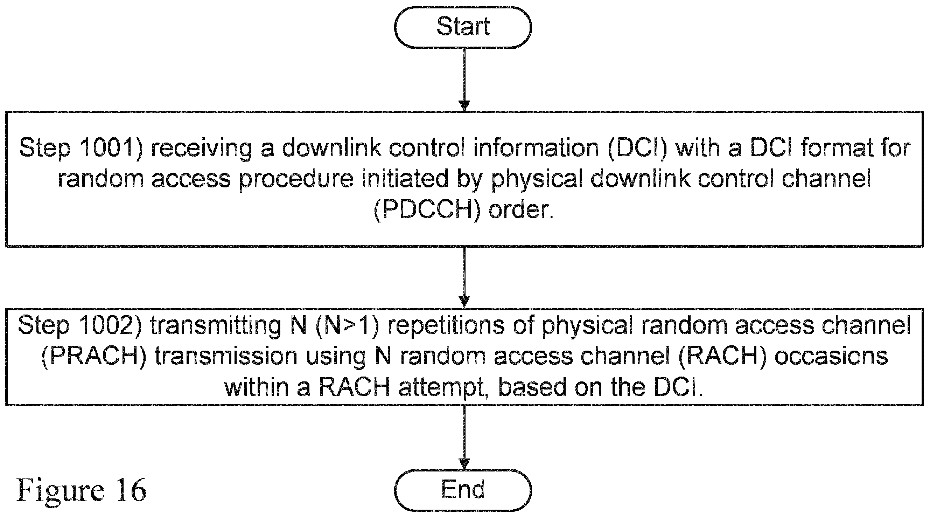

Figure 16 shows an example of a method for a terminal device 1. The method may comprise receiving a downlink control information (DCI) with a DCI format for random access procedure initiated by physical downlink control channel (PDCCH) order (Step 1001). The DCI format may include a first field which indicates a random access preamble index used for the PRACH transmission, a second field which indicates a synchronization signal/physical broadcast channel (SS/PBCH) index, and a third field which indicates the N RACH occasions associated with a SS/PBCH indicated by the SS/PBCH index for the N repetitions of the PRACH transmission. The method may also comprise transmitting N (N>1) repetitions of physical random access channel (PRACH) transmission using N random access channel (RACH) occasions within a RACH attempt, based on the DCI (Step S1002).

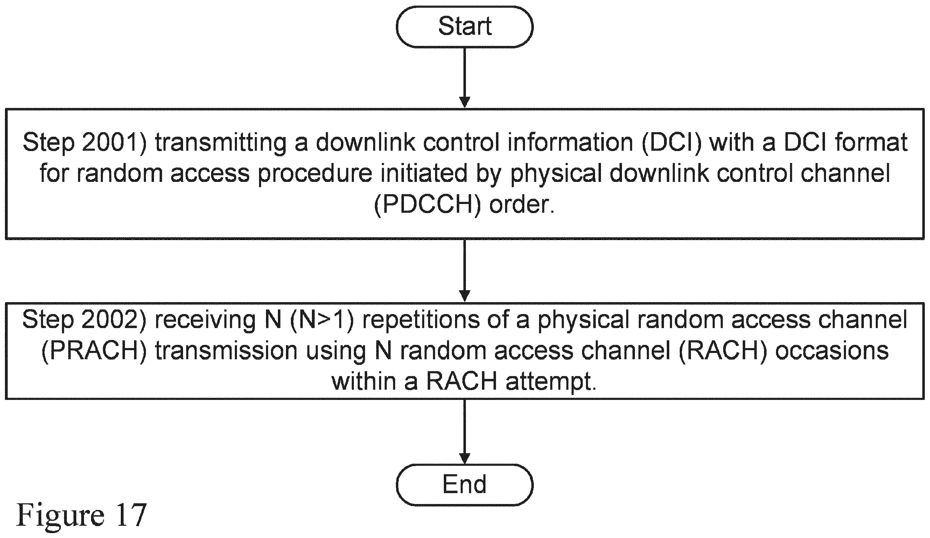

Figure 17 shows an example of a method for a base station device 3. The method may comprise transmitting a downlink control information (DCI) with a DCI format for random access procedure initiated by physical downlink control channel (PDCCH) order (Step 2001). The DCI format may include a first field which indicates a random access preamble index used for the PRACH transmission, a second field which indicates a synchronization signal/physical broadcast channel (SS/PBCH) index, and a third field which indicates the N RACH occasions associated with a SS/PBCH indicated by the SS/PBCH index for the N repetitions of the PRACH transmission. The method may also comprise receiving N (N>1) repetitions of a physical random access channel (PRACH) transmission using N random access channel (RACH) occasions within a RACH attempt (Step S2002).

Each of a program running on the base station device and the terminal device according to an aspect of the present invention may be a program that controls a Central Processing Unit (CPU) and the like, such that the program causes a computer to operate in such a manner as to realize the functions of the above-described embodiment according to the present invention. The information handled in these devices is transitorily stored in a Random-Access-Memory (RAM) while being processed. Thereafter, the information is stored in various types of Read-Only-Memory (ROM) such as a Flash ROM and a Hard-Disk-Drive (HDD), and when necessary, is read by the CPU to be modified or rewritten.

Note that the terminal device 1 and the base station device 3 according to the above-described embodiment may be partially achieved by a computer. In this case, this configuration may be realized by recording a program for realizing such control functions on a computer-readable recording medium and causing a computer system to read the program recorded on the recording medium for execution.

Note that it is assumed that the "computer system" mentioned here refers to a computer system built into the terminal device 1 or the base station device 3, and the computer system includes an OS and hardware components such as a peripheral device. Furthermore, the "computer-readable recording medium" refers to a portable medium such as a flexible disk, a magneto-optical disk, a ROM, a CD-ROM, and the like, and a storage device built into the computer system such as a hard disk.

Moreover, the "computer-readable recording medium" may include a medium that dynamically retains a program for a short period of time, such as a communication line that is used to transmit the program over a network such as the Internet or over a communication line such as a telephone line, and may also include a medium that retains a program for a fixed period of time, such as a volatile memory within the computer system for functioning as a server or a client in such a case. Furthermore, the program may be configured to realize some of the functions described above, and also may be configured to be capable of realizing the functions described above in combination with a program already recorded in the computer system.

Furthermore, the base station device 3 according to the above-described embodiment may be achieved as an aggregation (an device group) including multiple devices. Each of the devices configuring such an device group may include some or all of the functions or the functional blocks of the base station device 3 according to the above-described embodiment. The device group may include each general function or each functional block of the base station device 3. Furthermore, the terminal device 1 according to the above-described embodiment can also communicate with the base station device as the aggregation.

Furthermore, the base station device 3 according to the above-described embodiment may serve as an Evolved Universal Terrestrial Radio Access Network (E-UTRAN) and/or NG-RAN (Next Gen RAN, NR-RAN). Furthermore, the base station device 3 according to the above-described embodiment may have some or all of the functions of a node higher than an eNodeB or the gNB.

Furthermore, some or all portions of each of the terminal device 1 and the base station device 3 according to the above-described embodiment may be typically achieved as an LSI which is an integrated circuit or may be achieved as a chip set. The functional blocks of each of the terminal device 1 and the base station device 3 may be individually achieved as a chip, or some or all of the functional blocks may be integrated into a chip. Furthermore, a circuit integration technique is not limited to the LSI, and may be realized with a dedicated circuit or a general-purpose processor. Furthermore, in a case that with advances in semiconductor technology, a circuit integration technology with which an LSI is replaced appears, it is also possible to use an integrated circuit based on the technology.

Furthermore, according to the above-described embodiment, the terminal device has been described as an example of a communication device, but the present invention is not limited to such a terminal device, and is applicable to a terminal device or a communication device of a fixed-type or a stationary-type electronic device installed indoors or outdoors, for example, such as an Audio-Video (AV) device, a kitchen device, a cleaning or washing machine, an air-conditioning device, office equipment, a vending machine, and other household devices.

Furthermore, according to the above-described embodiment, the words/parameters described by *Italic* may be RRC parameter, higher layer parameter, PC5-RRC parameter and/or preconfigured parameter.

The embodiments of the present invention have been described in detail above referring to the drawings, but the specific configuration is not limited to the embodiments and includes, for example, an amendment to a design that falls within the scope that does not depart from the gist of the present invention. Furthermore, various modifications are possible within the scope of one aspect of the present invention defined by claims, and embodiments that are made by suitably combining technical means disclosed according to the different embodiments are also included in the technical scope of the present invention. Furthermore, a configuration in which constituent elements, described in the respective embodiments and having mutually the same effects, are substituted for one another is also included in the technical scope of the present invention.

## Claims

1. A user equipment, UE, comprising:
reception circuitry configured to receive a downlink control information, DCI, with a DCI format for random access procedure initiated by physical downlink control channel, PDCCH, order,
transmission circuitry configured to transmit N, N>1, repetitions of physical random access channel, PRACH, transmission using N random access channel, RACH, occasions within a RACH attempt, based on the DCI, wherein
the DCI format includes a first field which indicates a random access preamble index used for the PRACH transmission, a second field which indicates a synchronization signal/physical broadcast channel, SS/PBCH, index, and a third field which indicates the N RACH occasions associated with a SS/PBCH indicated by the SS/PBCH index for the N repetitions of the PRACH transmission.

2. The UE according to the claim 1, wherein
the third field is indicated with a bitmap wherein each bit in the bitmap corresponds to a RACH occasion associated with the SS/PBCH.

3. The UE according to the claim 1, wherein
the third field is indicated with a mask index wherein each index in the mask index corresponds to N RACH occasions within multiple RACH occasions associated with the SS/PBCH.

4. The UE according to the claim 3, wherein
which N RACH occasions within the multiple RACH occasions are associated with each index in the mask index is configured by a higher layer parameter.

5. A base station comprising:
transmission circuitry configured to transmit a downlink control information, DCI, with a DCI format for random access procedure initiated by physical downlink control channel, PDCCH, order,
reception circuitry configured to receive N, N>1, repetitions of a physical random access channel, PRACH, transmission using N random access channel, RACH, occasions within a RACH attempt, wherein
the DCI format includes a first field which indicates a random access preamble index used for the PRACH transmission, a second field which indicates a synchronization signal/physical broadcast channel, SS/PBCH, index, and a third field which indicates the N RACH occasions associated with a SS/PBCH indicated by the SS/PBCH index for the N repetitions of the PRACH transmission.

6. The base station according to the claim 5, wherein
the third field is indicated with a bitmap wherein each bit in the bitmap corresponds
to a RACH occasion associated with the SS/PBCH.

7. The base station according to the claim 5, wherein
the third field is indicated with a mask index wherein each index in the mask index corresponds to N RACH occasions within multiple RACH occasions associated with the SS/PBCH.

8. The base station according to the claim 7, wherein
which N RACH occasions within the multiple RACH occasions are associated with each index in the mask index is configured by a higher layer parameter

9. A method for a base station comprising:
transmitting a downlink control information, DCI, with a DCI format for random access procedure initiated by physical downlink control channel, PDCCH, order,
receiving N, N>1, repetitions of a physical random access channel, PRACH, transmission using N random access channel, RACH, occasions within a RACH attempt, wherein
the DCI format includes a first field which indicates a random access preamble index used for the PRACH transmission, a second field which indicates a synchronization signal/physical broadcast channel, SS/PBCH, index, and a third field which indicates the N RACH occasions associated with a SS/PBCH indicated by the SS/PBCH index for the N repetitions of the multiple PRACH transmission.
